# EUROPEAN PATENT SPECIFICATION

(11) **EP 3 426 563 B1**
(45) Date of publication and mention of the grant of the patent: **14.09.2022**
(21) Application number: 17763881.4
(22) Date of filing: 07.03.2017
(51) Int. Cl.: B65D 1/22, B65D 25/20, B65D 25/32, B65D 81/38, B65D 25/24, B65D 43/02, B65D 25/28, A47J 47/18

(54) **BUCKET**
EIMER
SEAU

(30) Priority: 07.03.2016 US 201662304565 P; 12.08.2016 US 201662374274 P; 06.03.2017 US 201715450526
(43) Date of publication of application: 16.01.2019
(73) Proprietor: Schneider, Joseph Scott, Ocean City, Maryland 21842 (US)
(72) Inventor: Schneider, Joseph Scott, Ocean City, Maryland 21842 (US)
(74) Representative: Barker Brettell LLP
(86) International application number: PCT/US2017/021114
(87) International publication number: WO 2017/155964

(56) References cited:
- CN-U- 202 400 383
- CN-U- 203 186 671
- CN-U- 204 072 010
- KR-Y1- 200 282 599
- US-A- 5 507 543

## Description

### BACKGROUND

### Background of the Invention

Bucket design challenges exist in conventional buckets and bucket-type carriers. Of concern is the operation life cycle of typical buckets and an inefficient ability to utilize and manipulate the same during operational use. Preventing failure in traditional buckets usually employs having extra buckets on hand or going to get another bucket once the immediate bucket in use fails.CN204072010 discloses a known water pouring device of a cylindrical rotary mop bucket. The water pouring device of the cylindrical rotary mop bucket comprises a bucket body, a bucket cover and a lifting handle.

Embodiments of the present invention alleviate the need for extra buckets by making the bucket sturdier and easier to handle. Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

### SUMMARY

According to first broad aspect, the present invention provides an assembly as claimed in claim 1. Disclosed embodiments may provide an ergonomic grip portion integrally formed with the handle. The handle may be connected to the bucket body via a twist-lock connection assembly.

### BRIEF DESCRIPTION OF THE DRAWINGS

The accompanying drawings, which are incorporated herein and constitute part of this specification, illustrate exemplary embodiments of the invention, and, together with the general description given above and the detailed description given below, serve to explain the features of the invention.
FIG. 1 is a schematic illustration of a bucket container with handle according to a first embodiment of the present invention.
FIG. 2 is a perspective view of the bucket container with handle according to the first embodiment of the present invention.
FIG. 3 is a second perspective view of the bucket container with handle according to the first embodiment of the present invention.
FIG. 4 is a schematic illustration of an attachment plug assembly for attaching the handle to the bucket of the present invention.
FIG. 5 is an alternate view of the attachment plug assembly of FIG. 4.
FIG. 6 is a schematic illustration of an attachment plug assembly being assembled to a bucket container with handle according to one embodiment of the present invention.
FIG. 7A is an enlarged view of a region A of FIG. 6.
FIG. 7B is an enlarged view of a region B of FIG. 6.
FIG. 8 is a first-side view of the bucket container with handle according to the first embodiment of the present invention.
FIG. 9 is a second-side view of the bucket with handle container according to the first embodiment of the present invention.

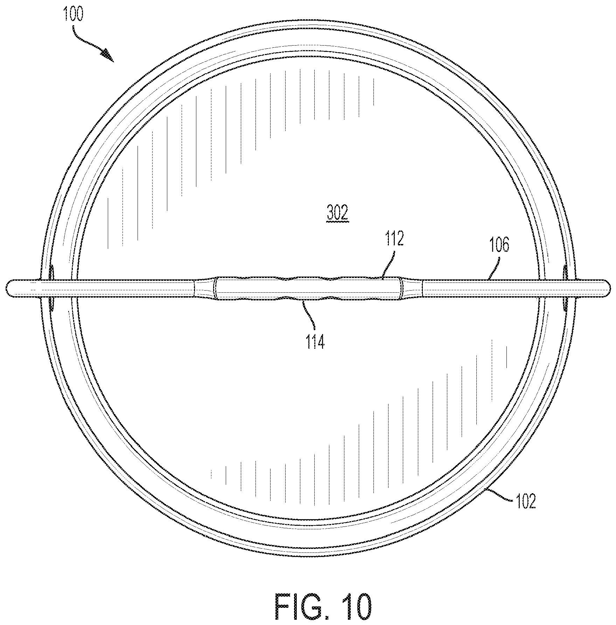

FIG. 10 is a top plan view of the bucket container with handle according to the first embodiment of the present invention.
FIG. 11 illustrates a bottom plan view of the bucket container with handle according to the first embodiment of the present invention.
FIG. 12 illustrates a bottom plan view of the first embodiment of the bucket container with handle having a second foot layout according to one embodiment of the present invention.
FIG. 13 illustrates a bottom plan view of the first embodiment of the bucket container with handle having a third foot layout according to one embodiment of the present invention.
FIG. 14 illustrates a bottom plan view of the first embodiment of the bucket container with handle having a fourth foot layout according to one embodiment of the present invention.
FIG. 15 is a schematic illustration of a bucket container with handle according to a second embodiment of the present invention.
FIG. 16 is a perspective view of the bucket container with handle according to the second embodiment of the present invention.
FIG. 17 is a first-side view of the bucket container with handle according to the second embodiment of the present invention.
FIG. 18 is a second-side view of the bucket with handle container according to the second embodiment of the present invention.
FIG. 19 is a top plan view of the bucket container with handle according to the second embodiment of the present invention.
FIG. 20 illustrates a bottom plan view of the bucket container with handle according to the second embodiment of the present invention.
FIG. 21 is a graphical diagram for a nylon resin according to one embodiment of the present invention.
FIG. 22 is a top perspective view of an exemplary lid which can be used with a bucket container according to one embodiment of the present invention.
FIG. 23 is a bottom perspective view of an exemplary lid which can be used with a bucket container according to one embodiment of the present invention.
FIG. 24 is a perspective view of an exemplary non-skid pad which can be used with the bucket of the present invention.
FIG. 25 illustrates another exemplary handle for the bucket of the present invention.
FIG. 26 illustrates a twist-lock connection assembly for attaching a handle to the bucket of the present invention.
FIG. 27 illustrates alternate views of a coupling connector for attaching a handle to the bucket of the present invention.
FIG. 28 illustrates alternate views of a mating retention cap for the connector of fig. 28.
FIG. 29 illustrates a perspective view of another bucket container according to one embodiment of the present invention.

### DETAILED DESCRIPTION OF THE INVENTION

### Definitions

Where the definition of terms departs from the commonly used meaning of the term, applicant intends to utilize the definitions provided below, unless specifically indicated.

It is to be understood that the foregoing general description and the following detailed description are exemplary and explanatory only and are not restrictive of any subject matter claimed. In this application, the use of the singular includes the plural unless specifically stated otherwise. It must be noted that, as used in the specification and the appended claims, the singular forms "a," "an" and "the" include plural referents unless the context clearly dictates otherwise. In this application, the use of "or" means "and/or" unless stated otherwise. Furthermore, use of the term "including" as well as other forms, such as "include", "includes," and "included," is not limiting.

For purposes of the present invention, the term "comprising," the term "having," the term "including," and variations of these words are intended to be open-ended and mean that there may be additional elements other than the listed elements.

For purposes of the present invention, directional terms such as "top," "bottom," "upper," "lower," "above," "below," "left," "right," "horizontal," "vertical," "up," "down," *etc.,* are used merely for convenience in describing the various embodiments of the present invention. The embodiments of the present invention may be oriented in various ways. For example, the diagrams, apparatuses, etc., shown in the drawing figures may be flipped over, rotated by 90° in any direction, reversed, *etc.*

For purposes of the present invention, a value or property is "based" on a particular value, property, the satisfaction of a condition, or other factor, if that value is derived by performing a mathematical calculation or logical decision using that value, property or other factor.

For purposes of the present invention, it should be noted that to provide a more concise description, some of the quantitative expressions given herein are not qualified with the term "about." It is understood that whether the term "about" is used explicitly or not, every quantity given herein is meant to refer to the actual given value, and it is also meant to refer to the approximation to such given value that would reasonably be inferred based on the ordinary skill in the art, including approximations due to the experimental and/or measurement conditions for such given value.

For purposes of the present invention, the term "bucket" or "pail" refers to a watertight, generally vertical cylinder or truncated cone, with an open top and a generally flat bottom. Some disclosed embodiments may include carrying handle typically referred to as a bail.

For purposes of the present invention, the term "circumference" refers to an enclosing boundary of a curved geometric figure.

For purposes of the present invention, the term "container" refers to a tool consisting of any device creating a partially or fully enclosed space that can be used to contain, store, and transport objects or materials.

For purposes of the present invention, the term "ergonomic" refers to equipment design intended to maximize productivity by reducing operator fatigue and discomfort. Additional aspects include designing and arranging equipment for use so that the user and equipment interact most efficiently, safely and comfortably in the working environment.

For purposes of the present invention, the term "flange" refers to a projecting rim, collar, ring or plate on a shaft, pipe, machine housing, etc., cast or formed to give additional strength, stiffness, or supporting area, or to provide a place for the attachment of other objects. The flange may be provided or formed as an external or internal ridge, or rim (lip), for strength.

For purposes of the present invention, the term "grip" refers to a part or attachment by which an object is held in the hand.

For purposes of the present invention, the term "handle" refers to a part of, or attachment to, an object that can be moved, held, carried or used by hand. In some embodiments the handle may include an ergonomic design.

For purposes of the present invention, the term "integral" refers to of, relating to, or belonging as a part of the whole; constituent or component; *i.e.,* necessary to the completeness of the whole; consisting or composed of parts that together constitute a whole.

For purposes of the present invention, the term "non-skid" refers to a design to prevent sliding or skidding.

For purposes of the present invention, the term "thermoplastic elastomer (TPE)" refers to a diverse family of rubber-like materials that, unlike conventional thermoset rubber, can be processed and recycled within the manufacturing process like thermoplastic materials.

For purposes of the present invention, the term "Santoprene^{™}" refers to a fully dynamically vulcanized ethylene propylene diene monomer (EPDM) rubber in a thermoplastic matrix of polypropylene (PP). Santoprene^{™} looks, feels and behaves like rubber but, due to the PP content, offers simple, flexible part design and manufacturing. Santoprene^{™} is essentially a high performance elastomer which exhibits the properties of rubber while providing the ease of processing of plastics. It has proven to be a dependable polymer for flexible engineered parts that require long-term performance. Santoprene^{™} provides reduced system costs, compared to materials such as thermoset rubber, has a potential for sustainability benefits. Santoprene^{™} TPV (thermoplastic vulcanizates) is available in several different grades. Depending on the ratio of EPDM rubber to PP, the physical properties such as hardness, modulus and flexibility will vary. Santoprene^{™} has the look, feel and behavior of EPDM rubber, but it can be processed on conventional thermoplastic processing equipment. This allows simplified, more flexible part design and easier manufacturing when compared to EPDM rubber. A main advantage of a TPV over EPDM rubber is lower weight for parts with a similar design. The weight reduction can be as high as 30%.

For purposes of the present invention, the term "watertight" refers to being closely sealed, fastened, or fitted so that no water enters or passes through.

For purposes of the present invention, the term "Zytel^{®}" refers to a trademark owned by DuPont^{™} and used for a number of different high strength, abrasion and impact resistant thermoplastic polyamide formulations of the family more commonly known as nylon. Common features of Zytel^{®} nylon resin include mechanical and physical properties such as high mechanical strength, excellent balance of stiffness and toughness, good high temperature performance, good electrical and flammability properties, good abrasion and chemical resistance. In addition, Zytel^{®} nylon resins are available in different modified and reinforced grades to create a wide range of products with tailored properties for specific processes and end uses. Zytel^{®} nylon resin, including most flame retardant grades, offer the ability to be colored. The good melt stability of Zytel^{®} nylon resin normally enables the recycling of property handled production waste. Zytel^{®} nylon resin typically is used in demanding applications in the automotive, furniture, domestic appliances, sporting goods and construction Industry. Zytel^{®} ST801AW NC010 Is a Super Tough, high performance polyamide 66 resin. It is UV stabilized and when appropriately colored offers the best resistance to indirect sunlight.

### Description

While the invention is susceptible to various modifications and alternative forms, specific embodiment thereof has been shown by way of example in the drawings and will be described in detail below. It should be understood, however that it is not intended to limit the invention to the particular forms disclosed, but on the contrary, the invention is to cover all modifications, equivalents, and alternatives falling within the scope of the claims.

Existing buckets (or pails) are commonplace physical containers. In a typical configuration, the bucket is cylindrical in shape having a closed bottom surface and an open top surface. In addition, buckets are often formed of low grade metal or plastic materials. As cheap materials are most often used, the resulting buckets are not very durable. In addition, their poor construction often leads to failure of the bucket at handle and other locations of the body of the bucket. Despite their ubiquity, buckets are also very limited by their lack of grip options.

Accordingly, the embodiments of the present invention are directed to an improved container assembly that substantially obviates one or more problems due to limitations and disadvantages of the related art. Although bucket configurations are described herein, it is readily understood by one of ordinary skill in art that the embodiments of the invention may be applied to a variety of container assemblies. By improving and increasing handle locations, the bucket and its contents are more easily controlled or otherwise manipulated. Moreover, by improving the composition of its structure with the use of a multi-layered insulated core, the utility, resiliency, and longevity of buckets are enhanced.

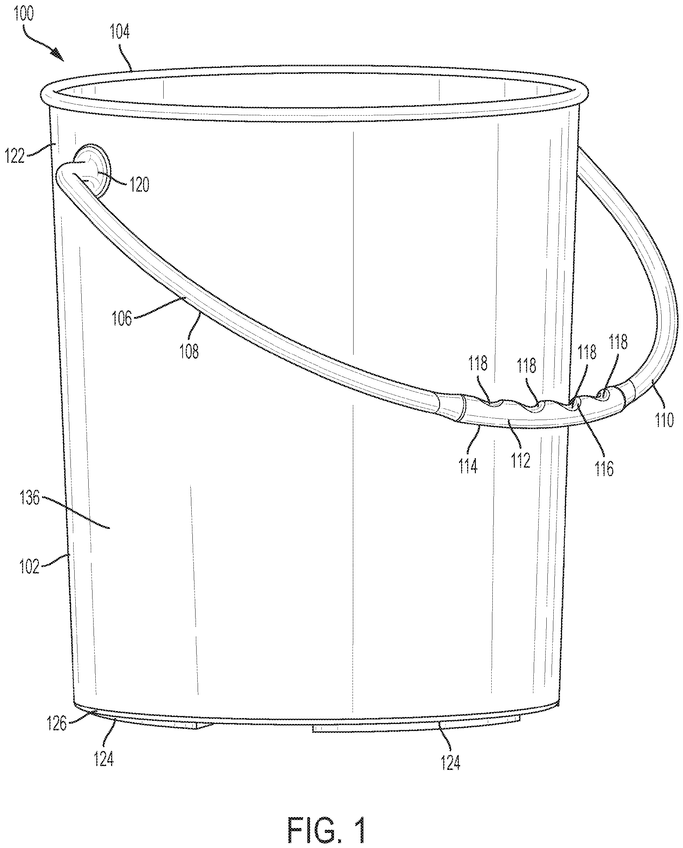

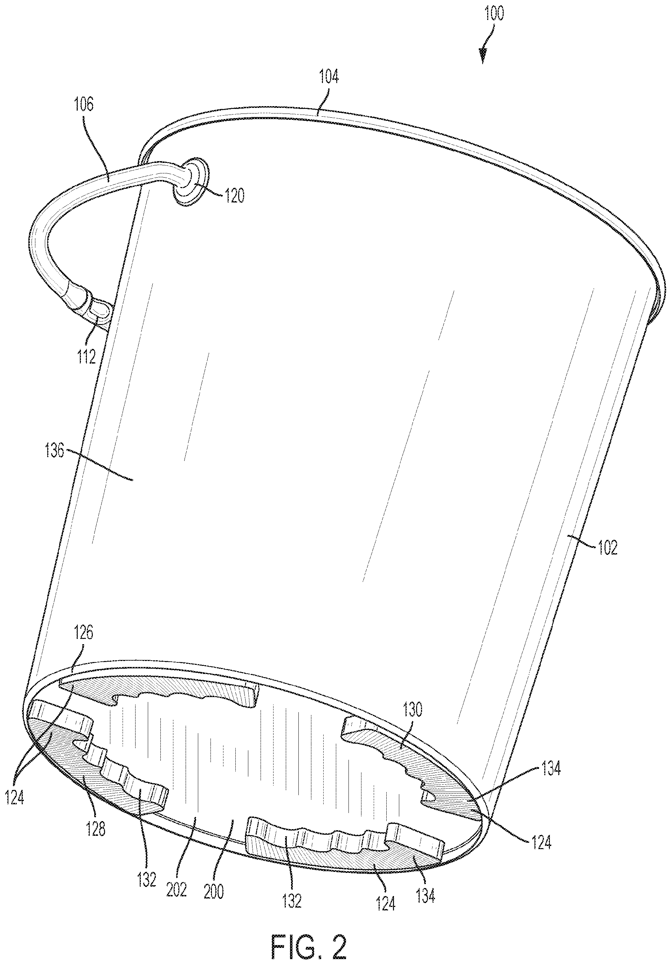

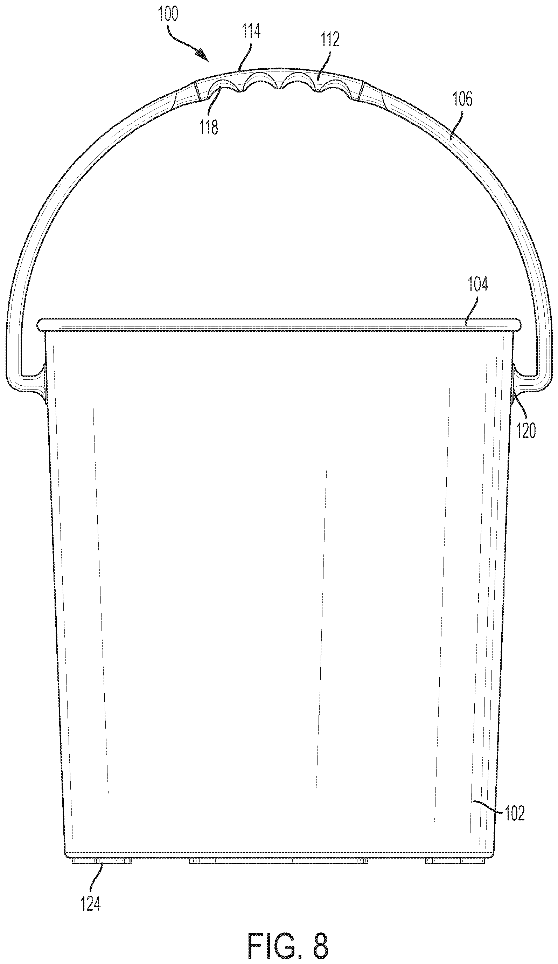

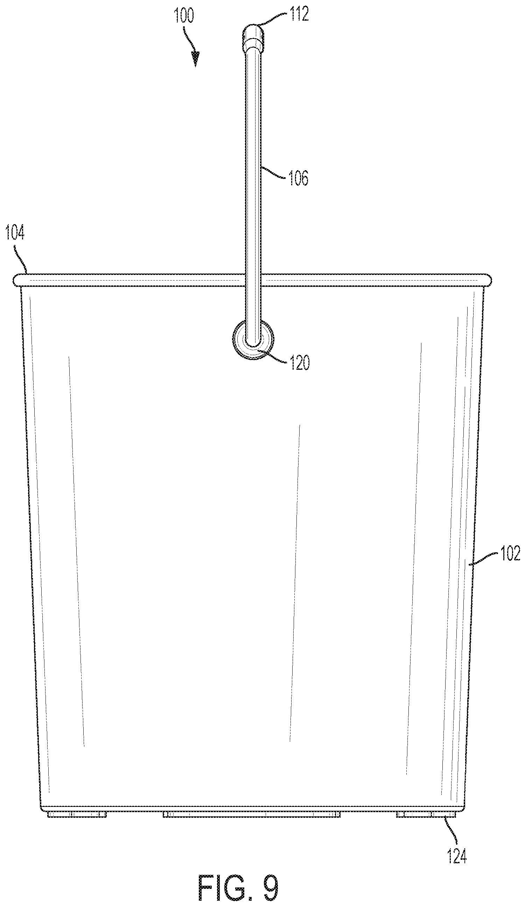

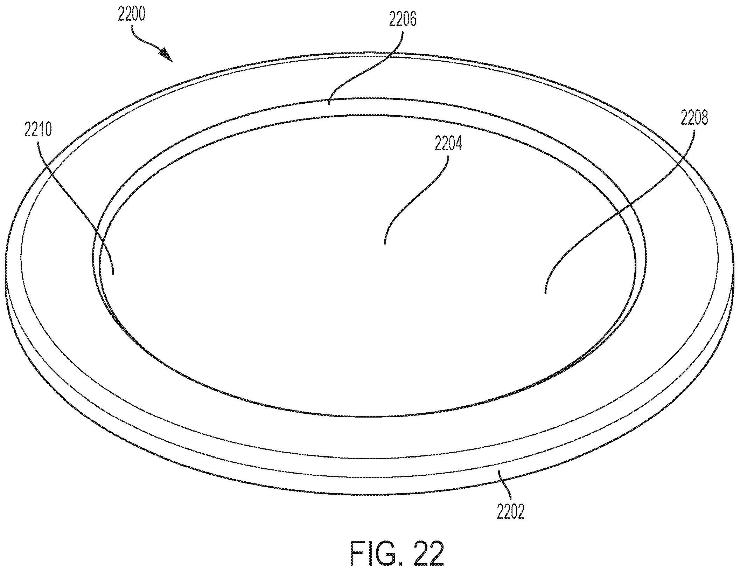

Turning to FIGS. 1-3 and 8-9, a bucket 100 is illustrated according to one disclosed embodiment of the invention. In an exemplary embodiment, the bucket body having vertical side walls 102 extending upwards from a generally flat closed bottom 202 to form a top rim at an opening of bucket 100. In some configurations, the top rim may be formed into a lip 104 disposed around the periphery of sidewalls 102 at the opening. Lip 104 facilitates securement of a lid 2200 (see FIG. 22) to the top of bucket 100 at the opening. The lid 2200 may incorporate, for example, a sealable snap-on type design to affix and secure an outer rim 2202 to lip 104 of bucket 100. The snap-on and off design allows for quick removal and replacement of sealable lid 2200.

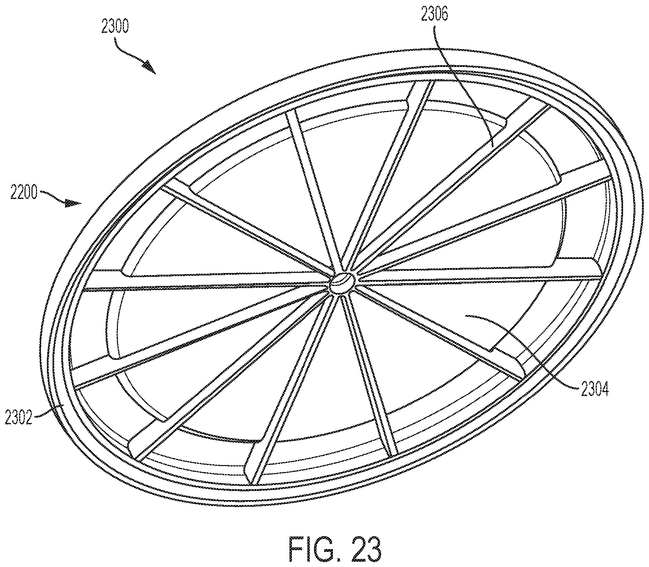

As shown in a bottom perspective view 2300, FIG. 23 illustrates a receiving channel 2302 on the underside 2304 of lid 2200. Outer rim 2202 of lid 2200 may be urged along lip 104 of bucket 100 to force lip 104 into receiving channel 2302. In this manner, lid 2200 may be retained to bucket 100 in a sealable fashion to retain the contents therein and/or prevent the contents from spilling. In addition, the sealing action of lid 2200 to bucket 100 serves to prevent exterior materials from entering an internal area of bucket 100 or to simply protect the contents from exterior elements. In addition, outer rim 2202 may be rigidly flexible to bend outwardly to release lip 104 from receiving channel 2302.

Additionally, lid 2200 may be configured with a built-in handle (not-shown) to make removing and re-installing the lid easier. Thus, lid 2200 may be separate and regarded as an accessory to bucket 100. In addition, lip 104 provides contouring to the edge of the opening of bucket 100 for pouring and also provides increased strength along the edge of bucket 100 around the periphery of the opening. Thus lip 104 facilitates the opening of bucket 100 to maintain its shape under stress.

Lid 2200 may serve as a seating area to the top of bucket 100 for a user. Lid 2200 may be configured to incorporate a seating area 2204 to accommodate a user. Seating area 2204 may be designed as a recessed area in about the center area in the top 2210 of lid 2200. Seating area 2204 may also provide additional functionality such as serving as a table area for retaining/supporting any number and variety of items generally disposed thereon. For example, an inner rim 2206 may be provided along a recessed area of seating area 2204 to generally retain and/or support the aforementioned variety of items disposed in seating area 2204. Seating area 2204 may also employ various ergonomic contours to enhance user comfort.

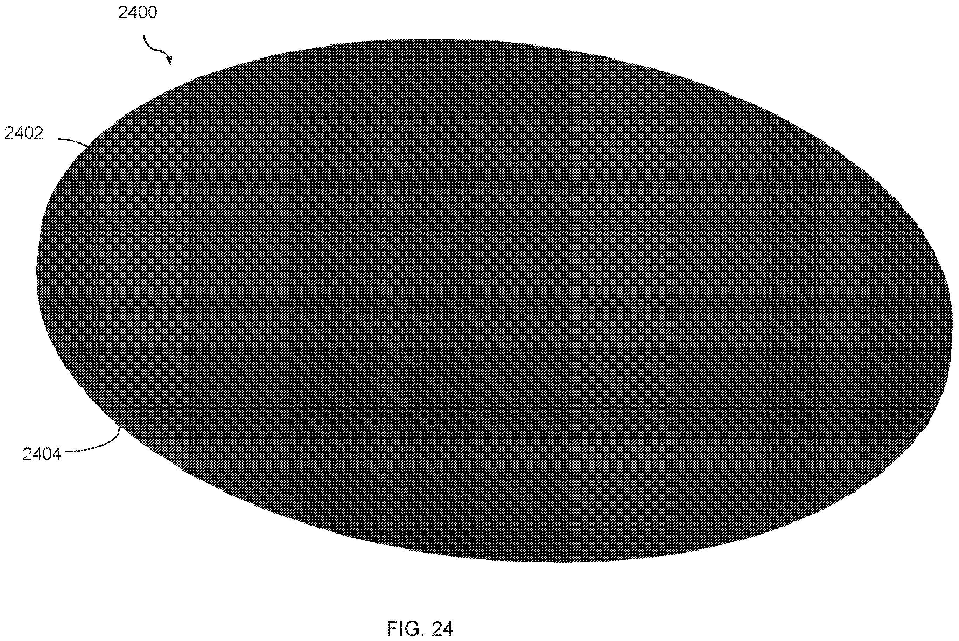

Additional support structure, such as spines or reinforcement ridges 2306, may be incorporated along the underside 2304 of lid 2200. Reinforcement ridges 2306 provide increased support to the lid to accommodate a user's weight (for example, sitting or standing) or materials set upon a top 2210 of lid 2200. In some embodiments, seating area 2204 may be configured to include an attachment area 2208, for example, configured to receive a separately applied support material (not shown), such as a cushion, for supporting a user in seating area 2204. Attachment area 2208 may employ any variety of securing means to retain the separately applied support material, such as including, but not limited to, adhesives, hook and tooth materials, screws, nails, *etc.* A portion of lid 2200, such as recessed area of seating area 2204, may accommodate other exemplary materials such as a non-skid pad 2400. Turning to FIG. 24, an exemplary non-skid pad 2400 may incorporate a non-skid design 2402, such as in a top surface 2404, to aid in traction, for example, should a user need to stand on bucket 100. Non-skid pad 2400 may also be designed having a prescribed thickness and, therefore, function as an enhancement to a user's comfort, for example, should they need to use it as a seat.

In one disclosed embodiment, vertical side walls 102 meet in connection with closed bottom 202 at an outer periphery base bottom 126 of bucket 100. Outer periphery base bottom 126 may be curved along its outer circumference to include an arch in its ends (similar to an eggshell). Thus, this joint connection at outer periphery base bottom 126 provides a curvature (or arch) that facilitates prevention and protection against cracking of bucket 100 by distributing applied stresses to outer periphery base bottom 126 over a wider area of its curved surface area and material to mitigate impacts. In one disclosed embodiment the aforementioned curvature of outer periphery base bottom 126 is about 0.32cm (1/8 inch) radius. This additional layer of protection assists in a prolonged lifespan of bucket 100. In some disclosed embodiments, a bottom rim 138 of outer periphery base bottom 126 may extend past exterior bottom surface 200 of flat closed bottom 202 thereby forming a lip 140. The circumference of lip 140 may include a curvature profile generally extending around flat closed bottom 202 of bucket 100.

A handle 106 is attached to bucket 100 to make bucket 100 maneuverable by a user such as for handling, transporting, or manipulating the contents therein. In one disclosed embodiment, handle 106 may comprise a grip portion 112 disposed between extending arms thereby forming an integrated one-piece generally rigid design of handle 106. Extending arms may comprise a first extending portion 108 (extending from one respective end of grip portion 112) and a second extending portion 110 (extending from another respective end of grip portion 112). First extending portion 108 and second extending portion 110 may each terminate at respective attachment ends 120, as described below. In one disclosed embodiment, first extending portion 108, second extending portion 110 and grip portion 112 of handle 106 form a generally semicircular design. It is readily appreciated that any shape or design may be formed by first extending portion 108, second extending portion 110 and grip portion 112 of handle 106 sufficient for operating and carrying bucket 100.

Grip portion 112 includes a top side 114 and a bottom side or underside 116. Ergonomic features may be integrated into grip portion 112 such as grooves, finger indents or finger receiving recesses 118 along the bottom or underside 116 thereof. In one select embodiment, grip portion 112 comprises four grooves, finger indents or finger receiving recesses 118. The disclosed design allows a user's fingers to naturally fall into respective grooves, finger indents or finger receiving recesses 118, for example, when grasping grip portion 112 from the top side 114. A rounded ergonomic contour of top surface 114 of grip portion 112 generally aligns with the natural curvature of a user's palm area when grip portion 112 is grasped by a user.

A removable shoulder strap (not shown) may be attached to handle 106. In one disclosed embodiment, the shoulder strap is affixed to first extending portion 108 and second extending portion 110 of handle 106. For example, first extending portion 108 and second extending portion 110 may include clip holes for removably attaching the shoulder strap. Shoulder straps may include a pad. Thus, removable shoulder strap gives the operator an additional option for transporting the bucket, for example, by carrying bucket 100 over the shoulder.

In select embodiments, each end of handle 106 is configured to turn inwardly to terminate at attachment ends 120 of handle 106. Attachment ends 120 are designed as male attachment ends of an attachment plug assembly (discussed below). Thus, in a disclosed embodiment, ends of handle 106 may terminate in male attachment ends 120 for securing handle 106 such as to the exterior surface 136 of vertical sidewalls 102. As further described below, a portion of male attachment ends 120 may be disposed through the side 122 of bucket 100.

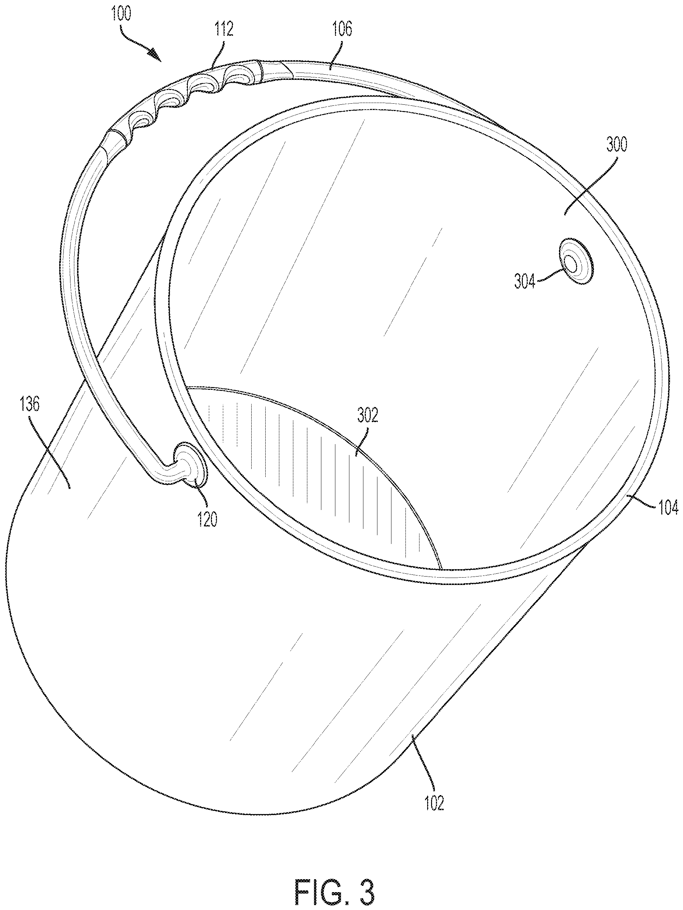

FIG. 3 illustrates a perspective view of bucket 100 wherein the interior wall 300 and an interior bottom 302 of bucket 100 are configured to retain the contents of bucket 100. A complimentary female receiving cap 304 is disposed in the interior of bucket 100. As described below, a portion of female receiving cap 304 is received through interior wall 300 and is designed to connect with male attachment end 120 to secure handle 106 to bucket 100.

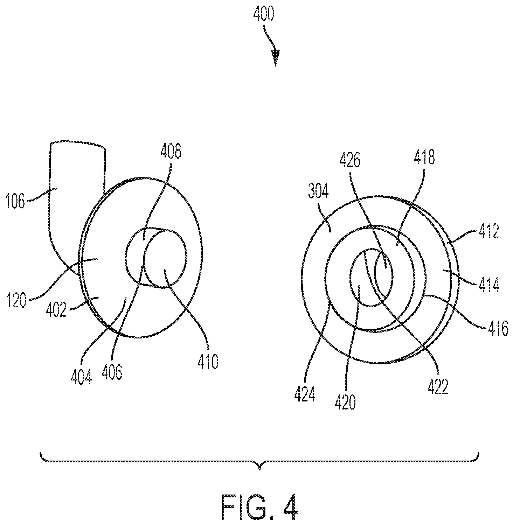

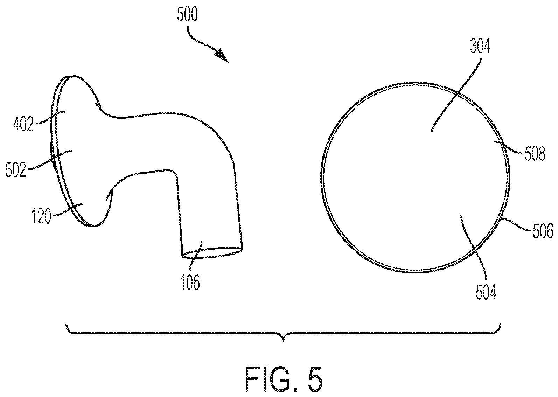

Turning to FIGS. 4 and 5, an attachment plug assembly 400 is illustrated including male attachment end 120 and female receiving cap 304. Male attachment end 120 may be integrally formed with handle 106. Male attachment end 120 may be configured to sprawl into a flanged portion 402. Projecting from an inner surface 404 of flanged portion 402 is a male extending portion 406 having sidewall 408 and terminating at end surface 410. Female receiving cap 304 may comprise a flanged head portion 412. A hollow extended portion 416 projects from an inner surface 414 of flanged head portion 412 and terminates at end surface 418. Hollow extended portion 416 is configured with a hollow interior 420 for receiving male extending portion 406.

Sidewall 408 of male extending portion 406 may be designed in a cylindrical configuration and is received within a complimentary configuration of interior surface 422 of hollow interior 420. The dimensions of the round cylindrical configuration of male extending portion 406 may be in close fit arrangement with interior surface 422 of hollow interior 420. End surface 410 of male extending portion 406 is urged toward back wall surface 426 of hollow interior 420. An adhesive is disposed within hollow interior 420 such that it may contact its inner region including, for example, interior surface 422 and back wall surface 426. The adhesive may include 3M Scotch-Weld Plastic & Rubber Instant Adhesive PR100. However any suitable adhesive may be utilized sufficient for bonding substrates, such as EPDM (ethylene propylene diene monomer (M-class)) rubber, nylon, polypropylene and polyethylene or any low viscosity instant adhesive applications.

As male extending portion 406 is urged within hollow interior 420, adhesive may be applied to end surface 410 and sidewall 408 to secure male extending portion 406 therein. A slight clearance area may exist within hollow interior 420 such as between sidewall 408 and interior surface 422 and/or between end surface 410 and back wall surface 426 to allow for curing and to accommodate for spreading and/or expansion of the adhesive. In a final assembly, end surface 418 of female receiving cap 304 generally abuts inner surface 404 of flange portion 402. By this arrangement, the adhesive is secured within hollow interior 420 and does not contact any surface areas of bucket 100. Once cured, male attachment end 120 is mated and secured to female receiving cap 304 whereupon handle 106 is capable of pivoting about hole 600. Accordingly, a final handle assembly may include first extending portion 108, second extending portion 110, grip portion 112, male attachment ends 120, and female receiving caps 304.

FIG. 5 illustrates an alternate view 500 of attachment plug assembly 400. Outer surface 502 is shown on flange portion 402. Outer surface 504 of flanged head portion 412 may generally resemble a mushroom shaped configuration. An edge 506 of flanged head portion 412 may include a curved surface 508. Curved surface 508 is provided to reduce stresses imparted to female receiving cap 304 which may be transferred through handle 106 by distributing externally applied forces throughout its material and against internal side wall 300.

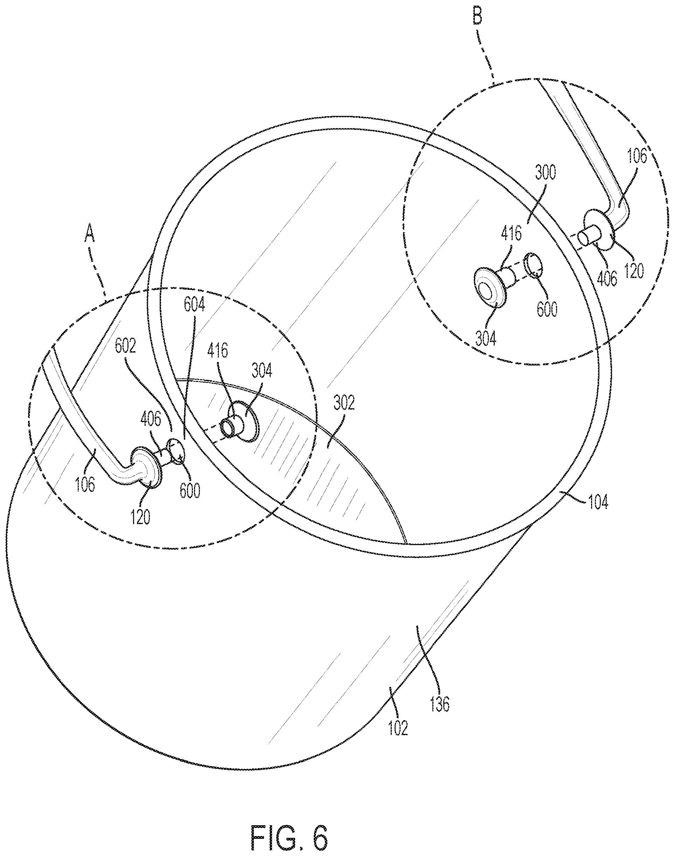

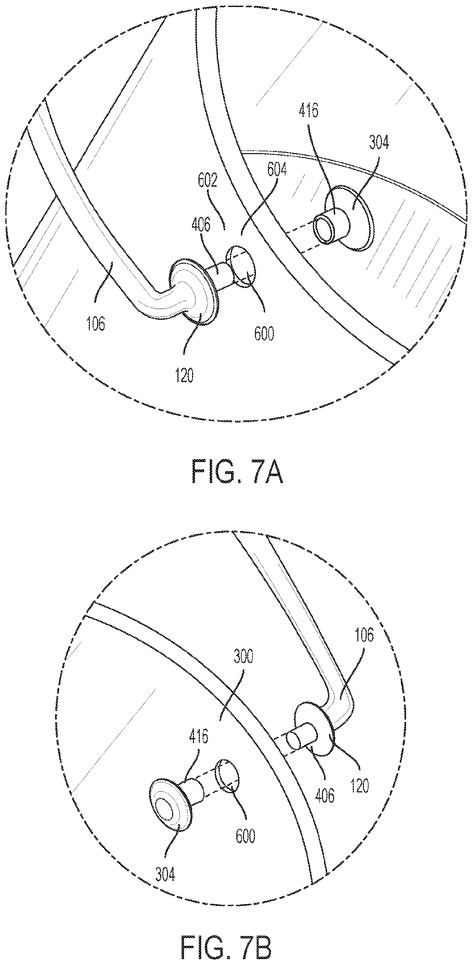

FIGS. 6, 7A and 7B detail the coupling of handle 106 to bucket 100. By connecting male attachment end 120 to female receiving cap 304 through a hole 600 in vertical side walls 102, handle 106 is attached to bucket 100. During assembly, male extending portion 406 and hollow extending portion 416 are inserted through opposite sides of hole 600 (FIG. 6) of bucket 100 and mated together. The dimensions of hole 600 is designed in close-fit arrangement with an exterior surface 424 of hollow extended portion 416. Exterior surface 424 may be round and complimentary to the round shape of hole 600 to produce the aforementioned tight fit arrangement. Yet, said tight fit arrangement is sufficient to allow exterior surface 424 of female receiving cap 304 to rotate within hole 600.

In a final arrangement, when handle 106 is connected to bucket 100, inner surface 404 of flange portion 402 is abutted against exterior surface 136 of vertical sidewall 102. Additionally, inner surface 414 of flanged head portion 412 is abutted against interior sidewall 300 of vertical sidewall 102. Flange portion 402 of male attachment end 120 and flanged head portion 412 of female receiving cap 304 prevent entry of foreign contents and loss of internal contents through hole 600. In addition, flange portion 402 of male attachment end 120 and flanged head portion 412 of female receiving cap 304 prevent handle 106 from being pulled through vertical side wall 102 of bucket 100. Furthermore, flange portion 402 and flanged head portion 412 may act as a baffle to disallow liquid from running straight out of hole 600.

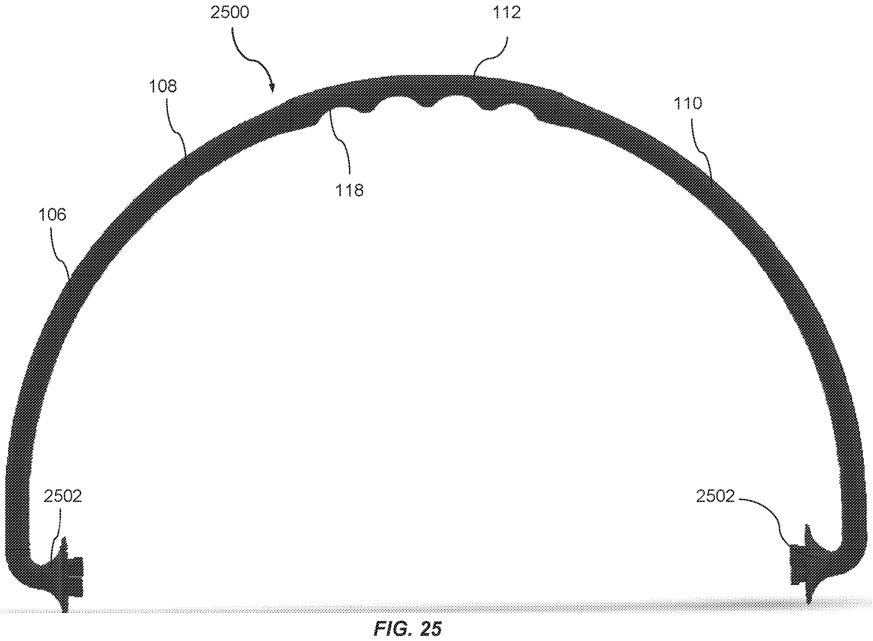

An alternative type of attachment system may be employed for attaching handle 106 to a bucket. For example, twist-lock connection assembly, may be provided and incorporated into the design of the handle for securing the same to the bucket. In additional, other structural features may be incorporated into the design of bucket 100 to accommodate the twist-lock connection assembly. Turning to FIG. 25 an exemplary disclosed handle 2500 may be fashioned, designed and constructed in practically every way as handle 106. Thus, handle 2500 may comprise a grip portion 112 disposed between extending arms thereby forming an integrated one-piece generally rigid design of handle 2500. Extending arms may comprise a first extending portion 108 (extending from one respective end of grip portion 112) and a second extending portion 110 (extending from another respective end of grip portion 112). First extending portion 108 and second extending portion 110 may each terminate at respective attachment ends, as described below. In one disclosed embodiment, first extending portion 108, second extending portion 110 and grip portion 112 of handle 106 form a generally semicircular design. It is readily appreciated that any shape or design may be formed by first extending portion 108, second extending portion 110 and grip portion 112 of handle 2500 sufficient for operating and carrying a bucket.

In select embodiments, each end of handle 2500 is configured to turn inwardly to terminate at attachment ends of handle 2500. In this embodiment, attachment ends comprise a coupling connector 2502 of a twist-lock connection assembly. Complimentary mating retention caps may accommodate each respective coupling connector of the twist-lock connection assembly to retain handle 2500 to a bucket as detailed below.

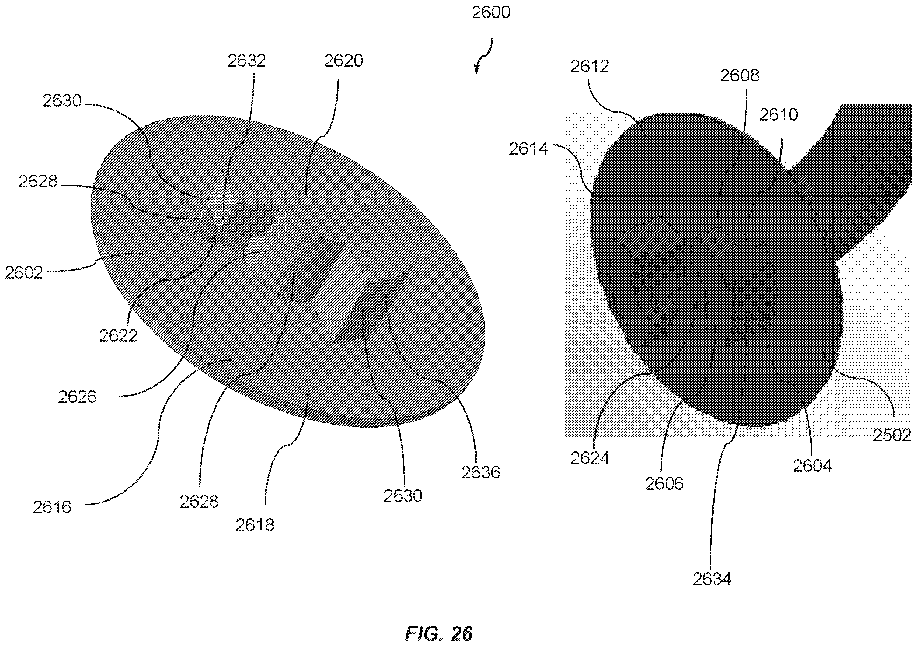

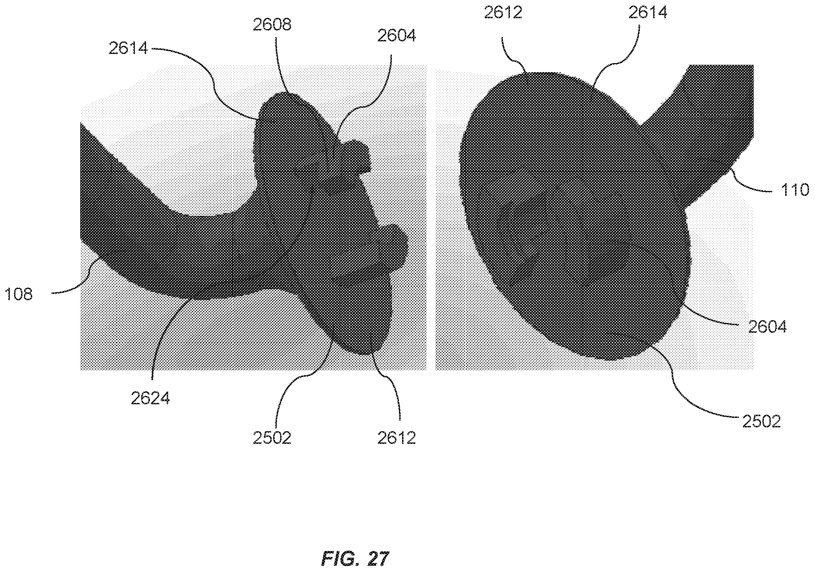

Turning to FIGS. 26-28, a twist-lock connection assembly 2600 is illustrated including coupling connector 2502 and mating retention cap 2602. Coupling connector 2502 may be integrally formed with handle 2500. Coupling connector 2502 may be configured with extending prongs 2604 configured to terminate at a head portion 2606. Head portion 2606 may be configured to include an extended portion which extends beyond a width of extending prong 2604 thereby forming a cutout area or channel 2610 such as in an L-type configuration. Cutout area or channel 2610 may extend along extending prongs 2604 from an inside surface 2612 of coupling connector 2502 flange portion 2614. Each integral extending prong 2604 and head portion 2606 may comprise a curvature within its design. Extending prongs 2604 may project symmetrically from about a center of inside surface 2612 of flange portion 2614. A space 2624 may be created between extending prongs 2604 for accommodating a complimentary mating support structure as described below.

Mating retention cap 2602 includes a flange portion 2616 having an interior surface 2618. Projecting from about a center of interior surface 2618 is a complimentary mating portion 2620 for accommodating integral extending prongs 2604 and head portion 2606 of male attachment end 2502. Complimentary mating portion 2620 may comprise a main support structure 2626 and extended locking portions 2630. Main support structure 2626 and extended locking portions 2630 may form an integral design structure. Extended locking portions 2630 may project from interior surface 2618 of flange portion 2616 as a base portion 2628 and extending to a wider head portion 2632 thereby forming complimentary cutout areas or channels 2622 at base portion 2628 for receiving respective extending portions 2608 of head portions 2606 in mated assembly. A configuration of base portion 2628 may extend to wider head portion 2630 generally forming an L-type configuration. Main support structure 2626 may generally extend from about a center of interior surface 2618 of mating retention cap 2602 for extending into a complimentary shaped space 2624 of coupling connector 2502 in mated assembly. Extended locking portions 2630 may comprise a curvature within its design structure.

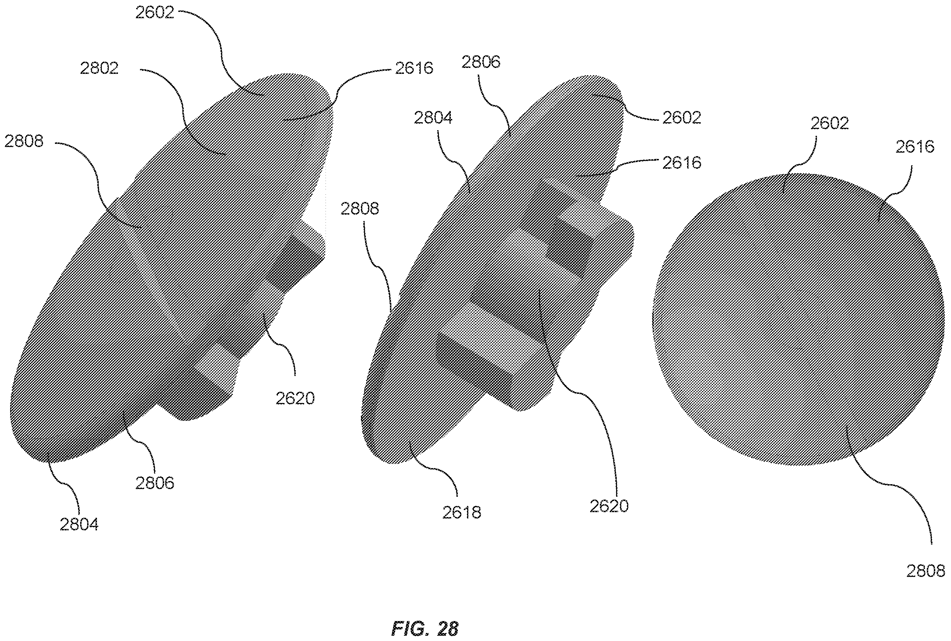

Alternate views of mating retention cap 2602 are illustrated in FIG. 28. An outer surface 2802 of flanged portion 2616 may generally resemble a mushroom shaped configuration. An edge 2804 of flanged portion 2616 may include a curved surface 2806. Curved surface 2806 is provided to reduce stresses imparted to mating retention cap 2602 which may be transferred through handle 2500 by distributing externally applied forces throughout its material and against the internal side wall of the bucket.

In a final assembly, coupling connector 2502 and mating retention cap 2602 are mated with one another by inserting complimentary mating portion 2620 into space 2624. Upon mating, retention cap 2602 may be rotated into a locked position by twisting extending clocking portions 2630 and head portion 2632 to connect and secure retention cap 2602 to coupling connector 2502. A groove 2808 may be provided in top side 2810 outer surface 2802 of mating retention cap 2602. Groove 2808 may be sufficiently sized to accommodate a tool, such as a flat head screwdriver, for facilitating rotation of mating retention cap 2602. While a generally elongated channel is provide as groove 2808, it is readily appreciated that any geometrically-designed shape for groove 2808 may be provided (such as a hexagonal, star, Phillips tool design, *etc.*) sufficient for imparting rotational force to top side 2810 outer surface 2802 of mating retention cap 2602. Such rotational movement of mating retention cap 2602 may engage head portion 2632 into cutout area or channel 2610 of coupling connector 2502. In addition, head portion 2608 is engaged within complimentary cutout areas or channels 2622 of mating retention cap 2602. Cutout area or channel 2610 of coupling connector 2502 may be sized to close fit relation with engages head portion 2632. Also complimentary cutout areas or channels 2622 are sized in close fit relation with head portion 2608. Thus, when mating retention cap 2602 is rotated in engagement with coupling connector 2502, head portions 2608 and 2632 are locked into place by close-frictional fit within cutout areas or channels 2622 and cutout area or channel 2610, respectively. Additional applications may also be provided to secure mating retention cap 2602 to coupling connector 2502 including, but not limited to adhesives and bonding agents. The adhesive may include 3M Scotch-Weld Plastic & Rubber Instant Adhesive PR100. However any suitable adhesive may be utilized sufficient for bonding substrates, such as EPDM (ethylene propylene diene monomer (M-class)) rubber, nylon, polypropylene and polyethylene or any low viscosity instant adhesive applications.

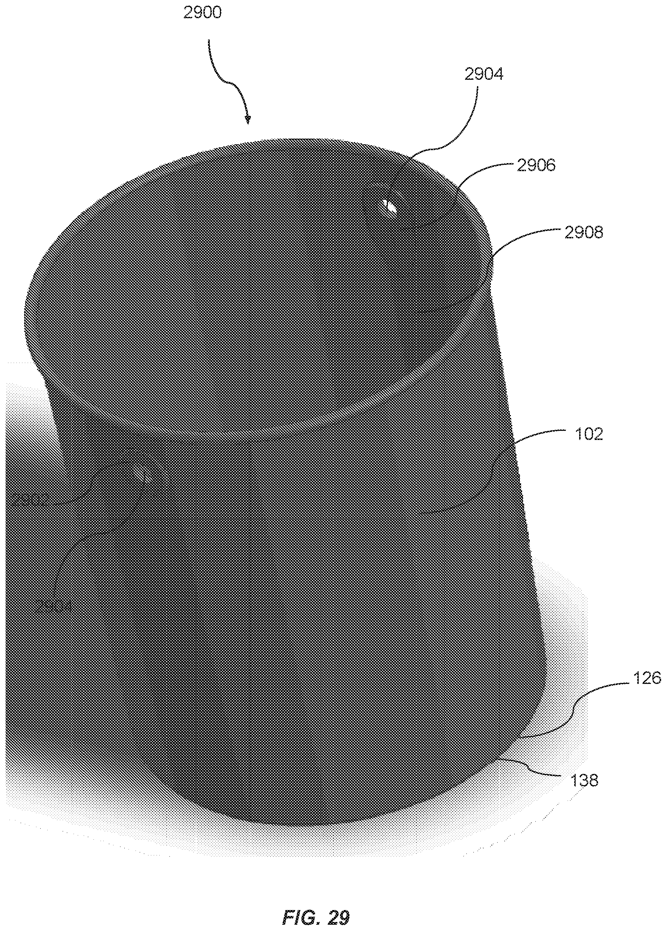

Turning to FIG. 29, an exemplary embodiment of another disclosed bucket 2900 is illustrated. In some disclosed embodiments, bucket 2900 is designed to accommodate handle 2500 and twist-lock connection assembly 2600. In many respects, bucket 2900 employs many design features as discussed in the embodiments for bucket 10, for example, including vertical side walls 102, lip 104, exterior bottom 200, and bottom rim 138. Thus, bucket 2900 is fashioned, designed and constructed in practically every way as bucket 100. However, bucket 2900 provides additional support structure features as disclosed herein. For example, disclosed embodiments provide external areas 2902 (along vertical walls 102 at and around hole 2904) and internal areas 2906 (along interior side wall 2908 at and around hole 2904) of bucket 2900 to be made thicker in an effort to create a stronger point of connection for twist-lock connection assembly 2600 and, hence, handle, 2500 to bucket 2900. As a result, flange portion 2614 of coupling connector 2502 and flange portion 2616 of mating retention cap 2602 may have an enlarged design and comprise a thicker material. The point (*i.e.,* attachment area 2902) on vertical side wall 102 where handle 2500 will attach will be made thicker a similar shape (*e.g.,* circular) of flange contact areas (*e.g.,* , flange portion 2614 of coupling connector 2502 and flange portion 2616 of mating retention cap 2602) to reinforce the attachment area 2902 at vertical side wall 102 and increase the resistance vertical side wall 102 has against handle 2500 pulling through. In some embodiments, bucket 2900 may be configured such that from the point in vertical side wall 102 where the aforementioned thickness will be increased, that thickness will carry from that point up towards the top of bucket 2900 and taper down to meet the rim of bucket 100. In one disclosed embodiment, the taper will follow the same degree as the overall wall of bucket 2900 follows from top to bottom.

By connecting coupling connector 2502 to mating retention cap 2602 through hole 2904 in vertical side walls 102, handle 2500 is attached to bucket 2900. During assembly, extending prongs 2604 of coupling connector 2502 and complimentary mating portion 2620 are inserted through opposite sides of hole 2904 of bucket 2900 and mated together (as described above). The dimensions of hole 2904 is designed in close-fit arrangement with the mated connection of exterior surface 2634 of extending prongs 2604 and exterior surface 2636 of extended locking portions 2630. In one disclosed embodiment, exterior surface 2634 of extending prongs 2604 and exterior surface 2636 of extended locking portions 2630 are round and complimentary to the round shape of hole 2904 to produce the aforementioned tight fit arrangement. Yet, said tight fit arrangement is sufficient to allow a mated connection of exterior surface 2634 of extending prongs 2604 and exterior surface 2636 to rotate within hole 2904.

In a final arrangement, when handle 2500 is connected to bucket 2900, inside surface 2612 of flange portion 2614 is abutted against thickened exterior areas 2902 of vertical sidewall 102. Additionally, interior surface 2618 of flange portion 2616 is abutted against thickened interior areas 2906 of interior sidewall 2908. Flange 2614 of coupling connector 2502 and flanged portion 2616 of mating retention cap 2602 generally prevent entry of foreign contents and loss of internal contents through hole 2904. In addition, flange 2614 of coupling connector 2502 and flanged portion 2616 of mating retention cap 2602 prevent handle 2500 from being pulled through vertical side wall 102 of bucket 2900. Furthermore, flange 2614 and flanged portion 2616 may act as a baffle to disallow liquid from running straight out of hole 2900.

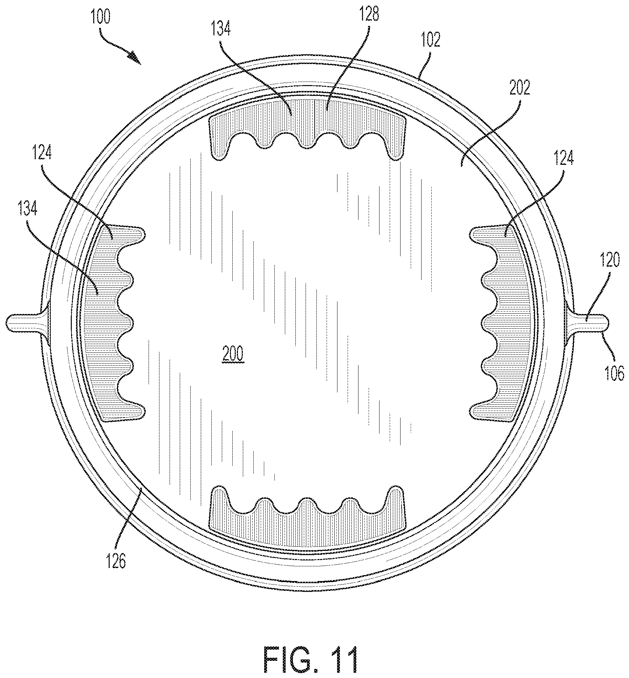

Turning again to FIGS. 1-2, 8-9 and 11, bucket 100 includes one or more feet 124 disposed on the exterior bottom surface 200 of bucket 100. One or more feet 124 may include a non-skid surface 128 on the exterior surface of the one or more feet thereby producing a one or more non-skid feet design. Non-skid surface 128 may be an integral design on the one or more feet 124 such as being molded into the material of one or more feet 123. Thus in some disclosed embodiments, non-skid surface 12 may be integrally designed into the surface of one or more feet 124. Alternatively, non-skid surface 128 may include a separately applied non-skid material to enhance the grip in both wet and dry conditions. The separately applied non-skid material may be removable and replaceable. Accordingly, non-skid feet 124 will serve to maintain a position of bucket 100 such as on wet or slippery surfaces. In some embodiments, an external surface of non-skid feet 124 may include a design pattern 130, such as a raised design pattern, lug or tread-like pattern. The raised design pattern, lug or thread-like patter allows liquid (such as water) to pass through design pattern 130 thereby expelling the liquid from beneath non-skid feet 124 to prevent a hydroplaning effect. Thus, the design pattern 130 enhances the stability of bucket 100 in wet conditions.

In particular, non-skid feet 124 are configured to include an ergonomic design such as one or more grooves, finger indents or finger receiving recesses 132 to give an operator a firm comfortable grip and help control the function of bucket 100 and its contents, for example, whether filling or emptying. In a select embodiment, non-skid feet 124 comprises four grooves or finger indents or finger receiving recesses 132. In addition, non-skid feet 124 provide ease for tasks that necessitate grabbing and manipulating the bottom of the bucket (e.g., pouring or scooping).

According to an example embodiment, non-skid feet 124 may be mounted to exterior bottom surface 200 of bucket 100. In some instances, non-skid feet 124 may be detachably connected to exterior bottom surface 200 of bucket 100. For example, non-skid feet 124 may be mounted and secured via connectors such as with 0.64cm (¼ inch) marine grade stainless steel screws. In another embodiment, a connecting assembly, such as marine grade stainless steel bolts and nuts, may be utilized to secure non-skid feet 124 to exterior bottom surface 200 of bucket 100. In another disclosed embodiment, non-skid feet 124 may be secured to exterior bottom surface 200 of bucket 100 by an adhesive. In one disclosed embodiment, the adhesive may include 3M Scotch- Weld Plastic & Rubber Instant Adhesive PR100. However any suitable adhesive may be utilized sufficient for bonding substrates, such as EPDM (ethylene propylene diene monomer (M-class)) rubber, nylon, polypropylene and polyethylene or any low viscosity instant adhesive applications. It is also readily appreciated that any other connection device or method may be utilized to detachably connect one or more non-skid feet 124 to exterior bottom surface 200 of bucket 100. In one disclosed embodiment, non-skid feet 124 are mounted such that the grooves or finger indents or finger receiving recesses 132 face towards the center of bucket 100. A contour of the backside 142 of non-skid feet 124 may be generally designed to match the same contour of the circumference of the outer edge of flat closed bottom 202 and/or bottom rim 138.

In some disclosed embodiments, a thickness of non-skid feet 124 may protrude or extend past bottom rim 138 of outer periphery base bottom 126. For example, in select embodiments, non-skid feet 124 may protrude a short distance (e.g., about 0.32cm (1/8 inch), and have an overall thickness (e.g. , about 0.95cm (3/8 of an inch)). Given that non-skid feet 124 extend past bottom 202, non-skid feet 124 may serve as a buffer from impacts, since any contact below bucket 100 will generally occur to non-skid feet 124 before reaching exterior bottom surface 200 of bucket 100, for example, when bucket 100 is dropped. Accordingly, since bucket 100 is elevated having been mounted to one or more non-skid feet 124, as a primary point of contact, one or more non-skid feet 124 may wear more quickly than bucket 100 itself.

Non-skid feet 124 are removable and replaceable thereby extending the wear-life of bucket 100. Non-skid feet 124 may vary in overall length (e.g., about 10.16cm (4 inches)). In other configurations, non-skid feet 124 may be integrally formed as part of bucket 100. Disclosed embodiments provide placement of non-skid feet 124 along exterior bottom surface 200 in a symmetrical manner such that two non-skid feet 124 generally align with the front and back of bucket 100, respectively, and two non-skid feet 124 generally align with each side (left and right) of bucket 100, respectively. Thus, at least two non-skid feet 124 are generally mounted in the swinging direction of handle 106, 2500. Another two non-skid feet 124 may be mounted perpendicular to the other two non-skid feet 124 mounted in the swinging direction of handle 106, 2500.

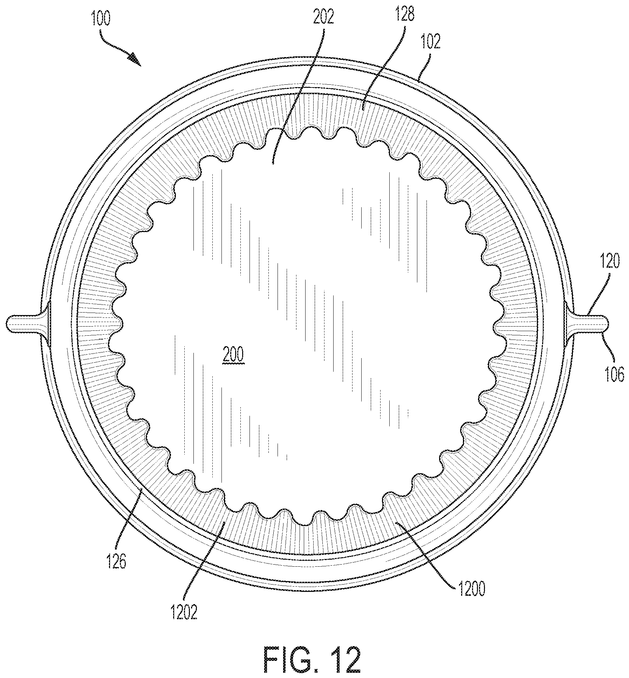

Skilled artisans will readily appreciate that more or less non-skid feet 124 may be applied and mounted to exterior bottom surface 200 of bucket 100 accordingly to individual design preferences. Recognizing that the utilization of any quantity/alternative number of non-skid feet 124 will generally depend on providing a preferred stability and protection for bucket 100, alternative non-skid feet configurations may be achieved. For example, turning to FIG. 12, the non-skid foot 1200 is configured as a one-piece foot design 1202. A contour of the backside 1202 of non-skid feet 1200 may be generally designed to match the same contour of the circumference of the outer edge of flat closed bottom 202 and/or bottom rim 138. Like the previously described non-skid feet 124, non-skid foot 1200 may incorporate a non-skid surface 128 (including, for example, a raised design pattern) on its exterior surface and be secured in a similar fashion to exterior bottom surface 200 of bucket 100. In an alternative configuration, non-skid foot 1200 may be integrally formed as part of bucket 100. As with non-skid feet 124, non-skid foot 1200 may be similarly replaceable, for example, after extended wear or damage.

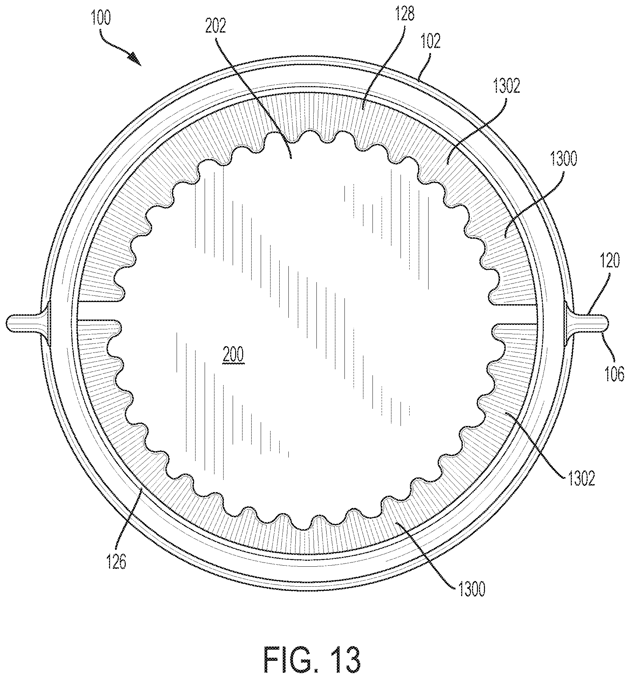

In another embodiment, FIG. 13 illustrates non-skid feet 1300 as a two-piece foot design 1302. A contour of the backside 1304 of non-skid feet 1300 may be generally designed to match the same contour of the circumference of the outer edge of flat closed bottom 202 and/or bottom rim 138. Like the previously described non-skid feet 124, non-skid feet 1300 may incorporate a non-skid surface 128 (including, for example, a raised design pattern) on its exterior surface and be secured in a similar fashion to exterior bottom surface 200 of bucket 100. In an alternative configuration, non-skid feet 1300 may be integrally formed as part of bucket 100. As with non-skid feet 124, non-skid feet 1300 may be similarly replaceable, for example, after extended wear or damage.

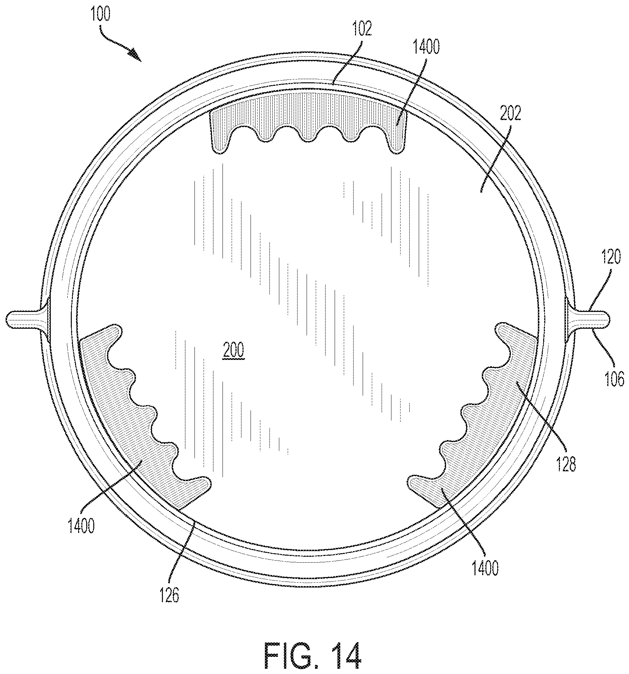

FIG. 14 illustrates a configuration where less non-skid feet are utilized along the bottom 202 of bucket 100. Nevertheless, the non-skid feet are placed generally at equal distances from one another to provide stability to bucket 100 and protection to exterior bottom surface 200. Accordingly, non-skid feet 1400 are disposed around the circumference of exterior bottom surface 200 or bottom rim 138 as a three-piece foot design. It is readily appreciated that previously discussed non-skid feet 124 may serve as non-skid feet 1400, and hence, non-skid feet 1300 may incorporate a non-skid surface 128 (including, for example, a raised design pattern) on its exterior surface and be secured in a similar fashion to exterior bottom surface 200 of bucket 100. In an alternative configuration, non-skid feet 1400 may be integrally formed as part of bucket 100. As with non-skid feet 124, non-skid feet 1400 may be similarly replaceable, for example, after extended wear or damage.

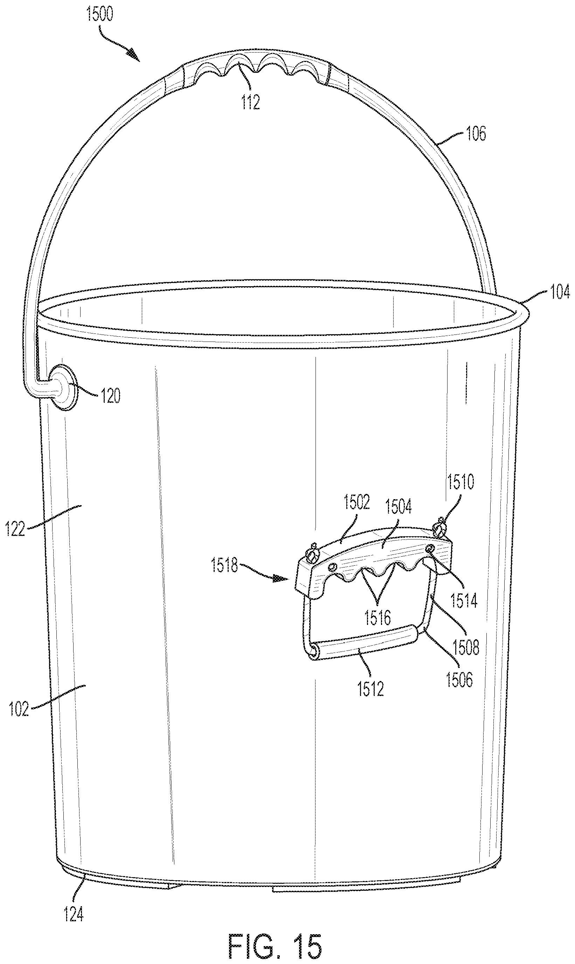

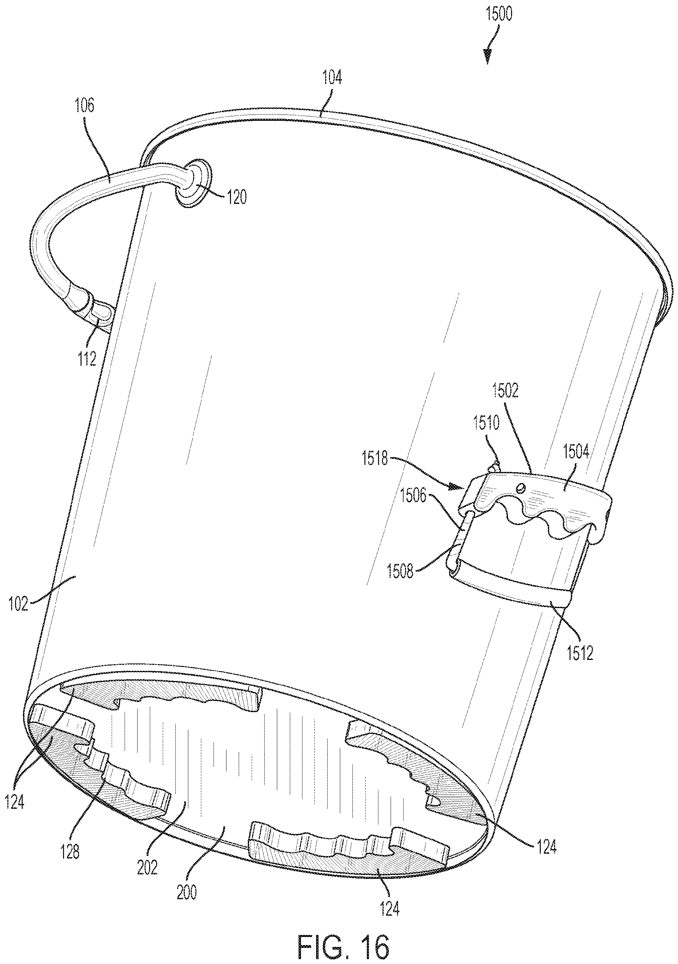

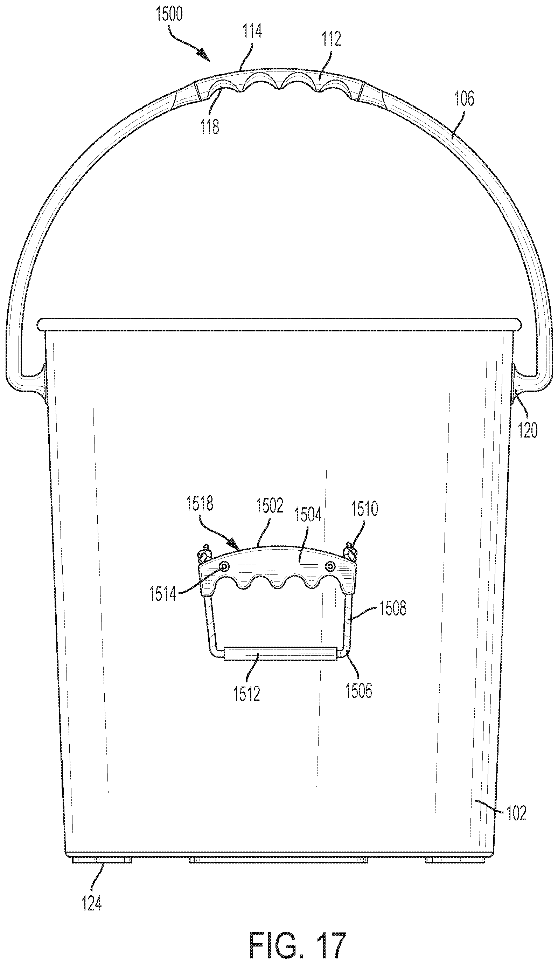

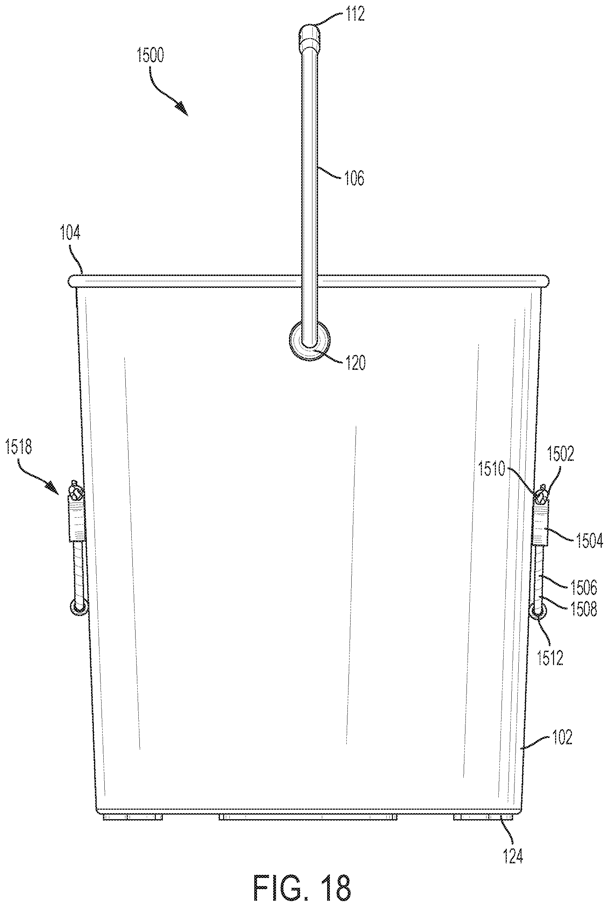

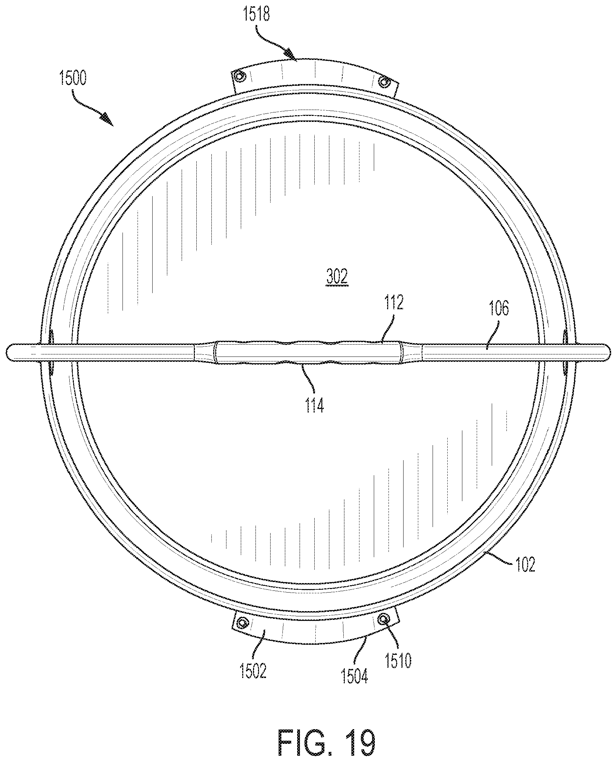

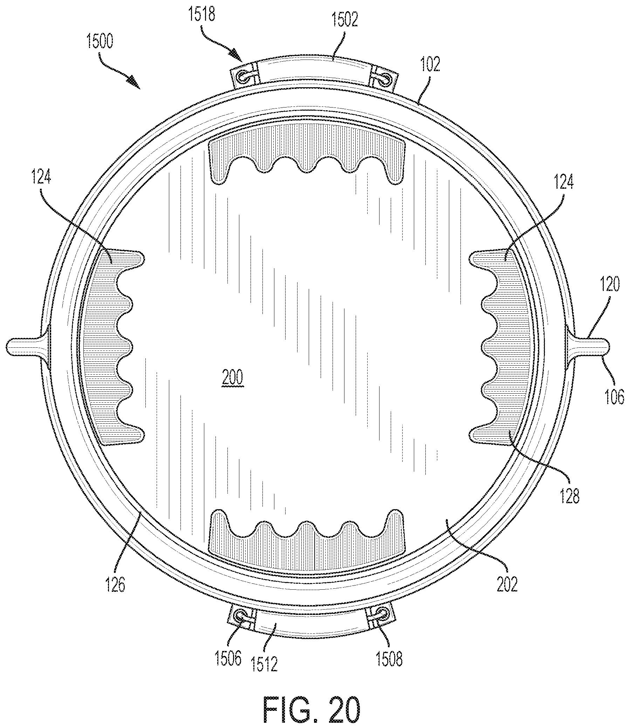

FIGS. 15-20 illustrate another embodiment of the disclosed bucket. In an alternate embodiment, construction of the bucket body (*i.e.,* vertical side walls 102 extending upwards from a generally flat closed bottom 202 to form a top rim at an opening) of bucket 1500 is similar in every way to bucket 100, however, the alternate embodiment of bucket 1500 includes one or more side handles 1518 introduced and mounted to exterior surface 136 of vertical sidewalls 102. In some embodiments, one or more side handles 1518 is detachably connected to vertical walls 102. One or more side handles 1518 may be disposed on the front and back of bucket 1500, *i.e.,* generally half way between the mounted locations of attachment ends 120 and in the swinging directions of handle 106. Mounted to bucket 1500 in this manner, one or more side handles 1518 facilitate handling and control of bucket 1500 during operation or manipulation thereby creating an improved handle configuration.

In some instances, one or more side handles 1518 include a two-in-one handle configuration including a rigid side handle 1504 and non-rigid side handle 1506. Non-rigid side handle 1506 may include a rope 1508 and rope handle or grip 1512. In a disclosed embodiment, each end of rigid side handle 1504 may include a thru-hole designed to accommodate rope 1508 (e.g., about 0.64cm (¼ inch rope)). Knots 1510 may be tied to secure rope 1508 through locations of rigid side handle 1504 to retain non-rigid side handle 1506 thereto. Rigid side handle 1504 may be detachably connected to side walls 102 of bucket 1500 via one or more connectors 1514 (such as with marine grade stainless steel screws, marine grade stainless steel bolt and nut assembly, adhesive, or any other appropriate securement device sufficient to retain one or more side handles 1518 to vertical wall 102).

Rigid side handle 1504 may include an ergonomic design such as being outfitted with grooves, finger indents or finger receiving recesses 1516 on the bottom side rigid side handle 1504 thereby forming a rigid grip for added control and manipulation of bucket 1500. Top surface 1502 of rigid side handle 1504 may employ an ergonomic design to accommodate a natural curvature of a user's palm. In one select embodiment, rigid side handle 1504 comprises four grooves, finger indents or finger receiving recesses 1516. The disclosed design allows a user's fingers to naturally fall into respective grooves, finger indents or finger receiving recesses 1516, for example, when grasping rigid side handle 1504 from top surface 1502. Thus, disclosed embodiments provide one or more side handles 1518 and/or one or more non-skid feet 124 disposed on the bottom surface of the bucket. In an exemplary embodiment, one or more non-skid feet 124 are aligned directly below one or more side handles 1518. Bucket 1500 and its contents can be controlled or otherwise manipulated using the two-in-one handle configuration disposed along the bucket's sides (for example, including grooves, finger indents or finger receiving recesses 1516 or rope handle or grip 1512) as well as handle 106 or non-skid feet 124.

In some embodiments, the two-in-one handle may have an overall length of about 12.7cm (five inches), and may protrude from the side of bucket 1500 (e.g., by about 1.91cm (¾ inches)). Despite such protrusions, rigid side handles 1504 may be integrally formed as an actual part of bucket 1500 (e.g., built into the mold).

### Construction and Materials

Disclosed embodiments provide an improved bucket with handle as a performance product superior in materials and functionality that's visually pleasing and minimalist in its appeal. Disclosed embodiments for bucket 100, 1500, 2900 include a performance polymer (often used in car parts to replace metal and designed to last 10 to 20 years and stand up to hundreds of thousands of engine cycles in extreme environments). The thickness of the bucket body (i.e., a cross-section of vertical side walls 102 and flat closed bottom 202) is about 0.32cm ( 1/8 inch) of an 2.54cm (1 inch) thick (versus the thickness of conventional bucket bodies which is about 0.16cm (1/16th of an inch) thick).

As a function of bucket 100, 1500, 2900 being elevated off the ground by non-skid feet 124, the bucket counteracts any instability by incorporating a wider base design. In a disclosed embodiment, the body of bucket 100, 1500, 2900 includes a shallow taper to allow the buckets to be stacked. The width at the top of bucket 100, 1500, 2900 is about 29.21cm (11.5 inches) and it tapers to about 26.67cm (10.5 inches) at outer periphery base bottom 126. Bucket 100, 1500, 2900 has an overall height of about 33.59cm (13.225 inches) tall giving it a volume of about 22.78 Litres (5.01 US Gallons). Additional embodiments of the shape of the body of bucket 100, 1500, 2900 may include other generally vertical cylinder or truncated cone configurations.

Two holes 600, 2904 in vertical side walls 102 of bucket 100, 1500, 2900 may be located 3.81cm (an inch and a half (1.5")) down from the top lip and serve as the mounting location of handle 106, 2500. The one-piece integrated handle 106, 2500 may be constructed from the same engineered resin as the body of bucket 100, 1500, 2900. In a disclosed embodiment, the circumference of the cross-section of each of first extending portion 108 and second extending portion 110 of handle 106, 2500 is about 0.95cm (3/8 of an inch). The circumference of the cross-section of the middle of grip portion 112 is about 1.27cm (a ½ of an inch). The design of the aforementioned circumference of grip portion 112 enhances a user's comfort over long and short periods for carrying loads within bucket 100, 1500, 2900. The added comfort is accomplished by distributing the weight of the burden over the wider surface area of grip portion 112 and having the fingers naturally fall into grooves, finger indents or finger receiving recesses 118.

As described above, the top rim of bucket 100, 1500, 2900 comprises lip 104 that is intended to accommodate a sealable snap-on lid. Lid 2200 design allows for quick attachment and removal from bucket 100, 1500, 2900. In disclosed embodiments, a cross-sectional thickness of lid 2200 is about 0.32cm (1/8 of an inch) thick (i.e., similar to a cross-section of vertical side walls 102 and flat closed bottom 202). In select embodiments, the disclosed non-skid pad of the lid may be the same material as non-skid feet 124 and also come in an array of colors and patterns to allow for customization.

Disclosed embodiments of the invention focus on simplicity and in selected embodiments, a total of two separate materials are incorporated into the construction of the materials utilized for the disclosed invention. For example, selected for its durability and resilient qualities, a performance polymer by Dupont^{™} may be utilized for the body of bucket 100, 1500 and the handle assembly. Accordingly, a nylon resin material such as Zytel^{®} may be utilized to injection mold the shape of the bucket body, the handle assembly of bucket 100, 1500 (including first extending portion 108, second extending portion 110, grip portion 112, male attachment ends 120, and female receiving caps 304). In one disclosed embodiment, Zytel^{®} ST801AW NCOIO is selected for the injection molding material. Thus, the body of bucket 100, 1500 and handle 106, 2500 and rigid side handles 1504 may be formed by injection molding. The natural color of the Zytel^{®} ST801AW NCOIO allows it to be easily colored and can be made available in almost any color in the spectrum. Zytel^{®} ST801AW NCOIO is received from the mold in a finished condition and requires no post mold configuring to get it to an assembly phase. Material properties and product information for Zytel^{®} ST801AW NCOIO are provided in Tables 1 and 2 below:

### Table I

### DuPont^{™} Zytel^{®} ST801AW NCOIO

### NYLON RESIN

### Product Information

Common features of Zytel^{®} nylon resin include mechanical and physical properties such as high mechanical strength, excellent balance of stiffness and toughness, good high temperature performance, good electrical and flammability properties, good abrasion and chemical resistance. In addition, Zytel^{®} nylon resins are available in different modified and reinforced grades to create a wide range of products with tailored properties for specific processes and end uses. Zytel^{®} nylon resin, including most flame retardant grades, offer the ability to be colored.

The good melt stability of Zytel^{®} nylon resin normally enables the recycling of property handled production waste. If recycling is not possible, DuPont recommends, as the preferred option, Incineration with energy recovery (- 31kJ/g of base polymer) in appropriately equipped installations. For disposal, local regulations have to be observed.

Zytel^{®} nylon resin typically is used in demanding applications in the automotive, furniture, domestic appliances, sporting goods and construction Industry.

Zytel^{®} ST801AW NC010 Is a Super Tough, high performance polyamide 66 resin. It is UV stabilized and when appropriately colored offers the best resistance to indirect sunlight in automotive interior applications.

| General Information | | | Value | Unit | Test Standard | |
|---|---|---|---|---|---|---|
| | Resin Identification | | PA66-HI | - | - | |
| | Part Marking Code | | >PA66-HI< | - | ISO 11469 | |
| Rheological Properties | | | drv/cond | Unit | Test Standard | |
| | Moulding shrinkage, parallel | | 2.0/^{∗} | % | ISO 294-4, 2577 | |
| | Moulding shrinkage, normal | | 1.8/^{∗} | % | ISO 294-4, 2577 | |
| Mechanical Properties | | | dry/cond | Unit | Test Standard | |
| | Tensile Modulus | | 1900/775 | MPa | ISO 527-1/-2 | |
| | Yield Stress | | 49/35.5 | MPa | ISO 527-1/-2 | |
| | Yield Strain | | 5/26.5 | % | ISO 527-1/-2 | |
| | Stress at 50% strain | | ^{∗}/48 | MPa | ISO 527-1/-2 | |
| | Stress at Break, 23°C, 50mm/min | | 45/48 | MPa | ISO 527-1/-2 | |
| | Strain at break | | | | | |
| | | Strain at break | ^{∗}/>50 | % | | |
| | | 50mm/min | 74/^{∗} | % | | |
| | Flexural Modulus | | 1800/728 | MPa | ISO 178 | |
| | Charpy impact strength | | | | ISO 179/1eU | |
| | | 23°C | N/- | kJ/m2 | | |
| | | -30°C | N/- | kJ/m2 | | |
| | | -40°C | 240/- | kJ/m2 | | |
| | Charpy notched impact strength | | | | ISO 179/1eA | |
| | | 23°C | 83/120 | kJ/m2 | | |
| | | -30°C | 23/22 | kJ/m2 | | |
| | | -40°C | 21/- | kJ/m2 | | |
| | Izod notched impact strength | | | | ISO 180/1A | |
| | | 23°C | 77/- | kJ/m2 | | |
| | | -40°C | 21/- | kJ/m2 | | |
| | Izod impact strength | | | | ISO 180/1A | |
| | | 23°C | N/- | kJ/m2 | | |
| | | -30°C | N/- | kJ/m2 | | |
| | Hardness, Rockwell, R-scale | | 110/- | - | ISO 2039-2 | |
| Thermal Properties | | | drv/cond | Unit | Test standard | |
| | Melting temperature, 10°C/min | | 262/^{∗} | °C | ISO 11357-1/-3 | |
| | Temp. of deflection under load | | | | ISO 75-1/-2 | |
| | | 1.8 MPa | 60/^{∗} | °C | | |
| | | 0.45 MPa | 155/^{∗} | °C | | |
| | Coeff. of linear therm. expansion, parallel | | 140/^{∗} | E-6/K | ISO 11359-1/-2 | |
| | Coeff. of linear therm. expansion, normal | | 120/^{∗} | E-6/K | | ISO 11359-1/-2 |
| | RTI, electrical, 0.75 mm | | 125/^{∗} | °C | | UL 746B |
| | RTI, electrical, 0.75 mm | | 75 | °C | | UL 746B |
| | RTI, strength, 0.75 mm | | 85 | °C | | UL 746B |
| Flammability | | | dry/cond | Unit | Test Standard | |
| | Burning Behav. at 1.5mm nom. thickn. | | HB/^{∗} | class | IEC 60695-11-10 | |
| | | Thickness tested | 1.5/^{∗} | mm | IEC 60695-11-10 | |
| | | UL recognition | UL/^{∗} - | | - | |
| | Burning Behav. at thickness h | | HB/^{∗} | class | IEC 60695-11-10 | |
| | | Thickness tested | 0.75/^{∗} | mm | IEC 60695-11-10 | |
| | Burning rate, Thickness 1 mm | | 26 | mm/min | ISO 3795 (FMVSS 302) | |
| Electrical properties | | | drv/cond | Unit | | Test Standard |
| | Relative permittivity | | | | | IEC 60250 |
| | | 100Hz | 3.4/6 | - | | |
| | | 1MHz | 3.2/3.5 | - | | |
| | Disssipation factor | | | | | IEC 60250 |
| | | 100Hz | 50/1760 | E-4 | | |
| | | 1MHz | 110/380 | E-4 | | |
| | Volume resistivity | | 2.5E14/2.4E10 | Ohm^{∗}m | | IEC 60093 |
| | Surface resistivity | | ^{∗}/7.1E12 | Ohm | | IEC 60093 |
| | Electric strength | | 26/26 | kV/mm | | IEC 60243-1 |
| | Comparative tracking index | | 600/- - | | | IEC 60112 |
| | Electric Strength, Short Time, 2mm | | 26/26 | kV/mm | | IEC 60243-1 |
| Other properties | | | drv/cond | Unit | | Test Standard |
| | Humidity absorption, 2mm | | 1.9/^{∗} | % | | Sim. to ISO 62 |
| | Density | | 1080/- | kg/m³ | | ISO 1183 |
| | Water Absorption, Immersion 24h | | 1.17/^{∗} | % | | ASTM D 570 |
| Film Properties | | | drv/cond | Unit | | Test Standard |
| | Strain at yield, parallel | | 9.49/^{∗} | % | | ISO 527-3 |
| Injection | | | drv/cond | Unit | | Test Standard |
| | Drying Recommended | | yes^{[1]} | - | | - |
| | Drying Time, Dehumidified Dryer | | 2-4 | h | | - |
| | Processing Moisture Content | | ≤0.2 | % | | - |
| | Melt Temperature Optimum | | 290 | °C | | - |
| | Min. melt temperature | | 280 | °C | | - |
| | Max. melt temperature | | 300 | °C | | - |
| | Max. screw tangential speed | | 0.3/^{∗} | m/s | | - |
| | Mold Temperature Optimum | | 70 | °C | | - |
| | Min. mould temperature | | 50 | °C | | - |
| | Max. mould temperature | | 90 | °C | | - |
| | Hold | | 50-100 | MPa | | - |
| | pressure range Hold pressure time | | 3 | s/mm | | - |

| | | | | | | |
|---|---|---|---|---|---|---|
| ^{1:} Yes, if moisture content of resin exceeds recommended level | | | | | | |

| Characteristics | | | |
|---|---|---|---|
| | Processing | • Injection Moulding | |
| | Delivery form | • Pellets | |
| Additives | • Release agent | | |
| Special characteristics | • Light stabilized or stable to light | • U.V. stabilised or stable to weather | |
| Regional Availability | • North America | • Asia Pacific | • Near East/Africa |
| | • Europe | • South and Central America | • Global |

### Processing Texts

### Injection molding

### Moulding datasheets

### Moulding guide

**Table 2**

| |
|---|
| DuPont^{™} Zytel^{®} ST801AW NC010 |

| Nylon Resin |
|---|
| Chemical Media Resistance |
| Acids |
| ✔ Acetic Acid (5% by mass) (23°C) |
| ✔ Citric Acid solution (10% by mass) (23°C) ° |
| ✔ Lactic Acid (10% by mass) (23°C) |
| × Hydrochloric Acid (36% by mass) (23° C) |
| × Nitric Acid (40% by mass) (23°C) |
| × Sulfuric Acid (38% by mass) (23° C) |
| × Sulfuric Acid (5% by mass) (23°C) |
| × Chromic Acid solution (40% by mass) (23°C) |
| Bases |
| × Sodium Hydroxide solution (35% by mass) (23° C) |
| ✔ Sodium Hydroxide solution (1% by mass) (23° C) |
| ✔ Ammonium Hydroxide solution (10% by mass) (23°C) |
| Alcohols |
| ✔ Isopropyl alcohol (23° C) |
| ✔ Methanol (23° C) |
| ✔ Ethanol (23° C) |
| Hydrocarbons |
| ✔ n-Hexane (23°C) |
| ✔ Toluene (23° C) |
| ✔ iso-Octane (23° C) |
| Ketones |
| ✔ Acetone (23° C) |
| Ethers |
| ✔ Diethyl ether (23° C) |
| Mineral oils |
| ✔ SAE 10W40 multigrade motor oil (23° C) |
| × SAE 10W40 multigrade motor oil (130° C) |
| × SAE 80/90 hypoid-gear oil (130° C) |
| ✔ Insulating Oil (23° C) |
| Standard Fuels |
| ✔ ISO 1817 Liquid 1 - E5 (60°C) |
| ✔ ISO 1817 Liquid 2 - M15E4 (60° C) |
| ✔ ISO 1817 Liquid 3 - M3E7 (60°C) |
| ✔ ISO 1817 Liquid 4 - M15 (60° C) |
| ✔ Standard fuel without alcohol (pref. ISO 1817 Liquid C) (23° C) |
| ✔ Standard fuel with alcohol (pref. ISO 1817 Liquid 4) (23° C) |
| ✔ Diesel fuel (pref. ISO 1817 Liquid F) (23° C) |
| × Diesel fuel (pref . ISO 1817 Liquid F) (90° C) |
| × Diesel fuel (pref. ISO 1817 Liquid F) (>90° C) |
| Salt solutions |
| ✔ Sodium Chloride solution (10% by mass) (23°C) |
| × Sodium Hypochlorite solution (10% by mass) (23° C) |
| ✔ Sodium Carbonate solution (20% by mass) (23° C) |
| ✔ Sodium Carbonate solution (2% by mass) (23° C) |
| × Zinc Chloride solution (50% by mass) (23° C) |
| Other |
| ✔ Ethyl Acetate (23° C) |
| × Hydrogen peroxide (23° C) |
| × DOT No. 4 Brake fluid (130° C) |
| × Ethylene Glycol (50% by mass) in water (108° C) |
| ✔ 1% nonylphenoxy-polyethyleneoxy ethanol in water (23° C) |
| ✔ 50% Oleic acid + 50% Olive Oil (23° C) |
| ✔ Water (23° C) |
| × Water (90° C) |
| × Phenol solution (5% by mass) (23° C) |

| |
|---|
| Symbols used : ✔ possibly resistant Defined as: Supplier has sufficient indication that contact with chemical can be potentially accepted under the Intended use conditions and expected service life. Criteria for assessment have to be Indicated (e.g. surface aspect, volume change, property change). × not recommended • see explanation Defined as: Not recommended for general use. However, short-term exposure under certain restricted conditions could be acceptab°°le (e.g. fast cleaning with thorough rinsing, spills, wiping, vapor exposure). Contact DuPont for Material Safety Data Sheet, general guides and /or additional information about ventilation, handling , purging, drying, etc. ISO Mechanical properties measured at 4.0mm (Hytrel^{®} measured at 2 mm), IEC Electrical properties measured at 2.0mm, all ASTM properties measured at 3.2mm, and test temperatures are 23 °C unless otherwise stated. |

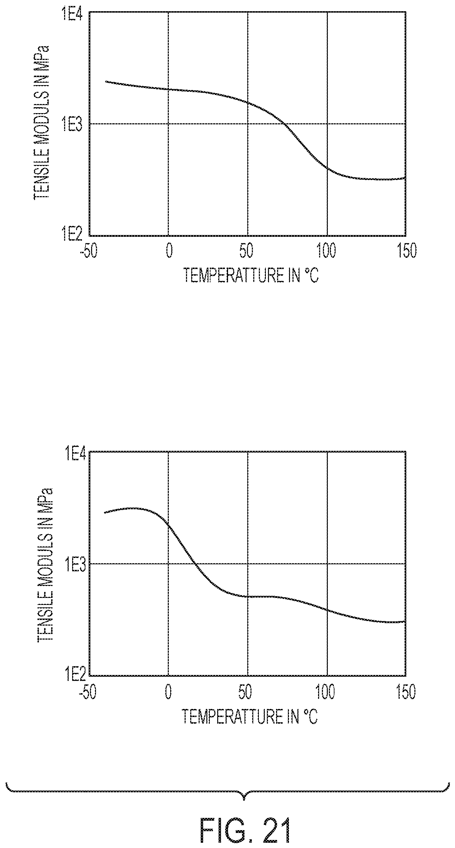

FIG. 21 illustrates tensile modulus versus temperature for Zytel^{®} ST801AW NC010.

It is readily appreciated that the selection of materials is not limited to Zytel^{®} and that any suitable engineered resin designed to be light weight and super tough with excellent impact resistance, hot and cold temperature resilience, good electrical and flammability properties, good abrasion and chemical resistance, BPA free and good UV stabilization for forming the aforementioned components of the disclosed invention may be utilized..

Materials selection for non-skid feet 124 may comprise a second material. In select embodiments, the second material may include Santoprene^{™}. Thus, non-skid feet 124 may be formed by injection molding. It is readily appreciated that the selection of materials is not limited to Santoprene^{™} and that any rubber material compound may be utilized for generating the over-all shape of non-skid feet 124 including design pattern 130 (such as a raised design pattern, lug or tread-like pattern) sufficient for providing/achieving high-performance grip and traction in accordance with the disclosed invention. Several colors for non-skid feet 124 may be available to enable customization of bucket 100, 1500, 2900.

Thus, the embodiments of the present invention can dramatically enhance the control that a user has over bucket 100, 1500, 2900 and the tasks for which it is being utilized with the addition of strategically placed multi-functioning handles and grips located on the sides and bottom of the bucket. In addition to improving the utility, resiliency, and longevity of the bucket, the engineered nylon resin core may increase the utility of the vessel by allowing it to retain ice and double as a cooler. Other disclosed aspects include the bucket's ability to retain heat such as for heated foods and/or beverages.

From the point bucket 100, 1500, 2900 is lifted/maneuvered, grasping grip portion 112 in handle 106, 2500 causes the fingers to naturally fall into their respective grooves, finger indents or finger receiving recesses 118 and instantly makes carrying or manipulating a load more comfortable by distributing the burden over a wider surface area of grip portion 112. Accordingly, the user has an increased sense of control and comfort, for example, when filling or pouring out the contents of bucket 100, 1500, 2900 as they naturally grab the base of the bucket and utilize the grip and grooves or finger indents or finger receiving recesses 132 of non-skid feet 124. This equates to less exertion by the operator and minimizes the risk of the contents and/or bucket 100, 1500, 2900 slipping from their grasp and causing damage or injury. In a disclosed embodiment, a design feature of bucket 100, 1500, 2900 includes a gentle taper in the vertical sidewalls 102 which may be subtle, *i.e.,* virtually unnoticeable. The resulting look conveys clean lines that echo a more refined approach to performance utilization.

It will be apparent to those skilled in the art that various modifications and variations can be made in the improved insulating container of the present invention without departing from the spirit or scope of the invention. Thus, it is intended that the present invention cover the modifications and variations of this invention provided they come within the scope of the appended claims and their equivalents.

### Multi-layer Structure

Buckets according to another example embodiment of the present invention may be formed to include a multi-layered insulated core. In addition to improving the utility, resiliency, and longevity of the bucket, the multi-layered insulated core may increase the utility of the vessel by allowing it to retain ice and double as a cooler. Other disclosed aspects include the bucket's ability to retain heat such as for heated foods and/or beverages.

Accordingly to an exemplary disclosed embodiment, the interior and exterior of the lid and body of the bucket may be constructed using a process of biaxial rotomolding using a base of medium density powdered polyethylene with ultra-violet inhibitors. For example, both the interior and exterior wall of the bucket may be 0.32cm (1/8 inch thick). The middle layer or core of the bucket may be made of a variety of insulating materials, such as PUR in-situ foam or polyurethane foam. The insulating material may be sprayed or otherwise deposited into the void created between the interior and exterior two rigid layers of polyethylene with ultra-violet inhibitors. In some instances, the insulating layer may be 0.64cm ( ¼ inch) thick, and deposited to have a seamless structure.

### Molding Aspects

A mold for the bucket used in the rotomolding machine may include appropriate locations for aluminum bar handle anchor points as well as the two-in-one rope side handle anchor points. The anchor points of the non-skid feet may be located in the mold as this is where they would be attached to the bucket bottom. The resulting bucket body and lid may then be constructed accordingly with the handle attachments, non-skid feet, sealable lid, and the removable shoulder strap. The body and lid of the bucket may be constructed via a process of biaxial rotomolding. The roto-molded multi-layered insulated core body may fixed with the aluminum bar handle with grips on opposing sides of the bucket. The two-in-one rope side handles with finger indents grip may also be affixed on opposing sides of the bucket. The non-skid feet with finger indents may also be affixed on the bottom of the bucket in various configurations. The sealable multi- layered insulated core lid can be affixed to the top of the roto-molded bucket body. An aluminum bar handle with grip portion may be constructed and attached to the bucket. A shoulder strap can be attached, for example, to clip holes on the aluminum bar handle with grip portion.

### Additional Aspects

The embodiments of the present invention are unique as the change in the composition of the body of the bucket to a mutli-layered insulated core construction creates unmatched strength and longevity and opens up a new realm of utility previously unseen such as by creating the ability to retain ice and double its use as a cooler.

The invention described here drastically increases the life and effectiveness of the bucket by using materials that make the body of the bucket exponentially stronger and easier to use. The handle systems not only accommodate the weight of whatever the operator wants to fill the bucket with, but also give the user several different options for increased control as different materials and situations often call for. The non-skid feet prevent the bucket from sliding away from where it is placed and the attachable lid prevents the contents from spilling and enhances the insulation qualities of the vessel. The result is a well-made product with increased functionality and a longer life.

While the present invention has been disclosed with references to certain embodiments, numerous modification, alterations, and changes to the described embodiments are possible without departing from the scope of the present invention, as defined in the appended claims. Accordingly, it is intended that the present invention not be limited to the described embodiments, but that it has the full scope defined by the language of the following claims.

## Claims

1. An assembly comprising:
a bucket body (100) having vertical side walls (102);
wherein the vertical side walls extend upwards from a closed bottom base (202);
a handle (106) connected to the vertical side walls (102),
**characterized by**
one or more ergonomically designed feet (124) detachably connected to and extending beyond a bottom surface (200) of the bottom base (202).

2. The assembly of claim 1,
wherein the handle and the bucket body (100) comprise a first material; and the one or more ergonomically designed feet (124) comprise a second material different from the first material.

3. The assembly of claim 1 or 2, wherein the one or more ergonomically designed feet (124) include grooves, finger indents or finger receiving recesses (118).

4. The assembly of claim 2 or 3, wherein the one or more ergonomically designed feet (124) are connected to the bottom surface (200) such that the grooves or finger indents or finger receiving recesses (118) face towards a center of the bucket body (100).

5. The assembly of any one of the claims 1 to 4, wherein a backside of the one or more ergonomically designed feet (124) follows the same contour as an outer edge of the bottom surface (200) of the bottom base (202).

6. The assembly of any one of the claims 1 to 5, wherein an external surface of the one or more ergonomically designed feet (124) includes a design pattern (130).

7. The assembly of claim 6, wherein the design pattern (130) is selected from one of a raised design pattern, lug, or tread pattern.

8. The assembly of any one of the claims 1 to 7, wherein an external surface of the one or more ergonomically designed feet (124) includes a non-skid surface.

9. The assembly of claim 8, wherein the non-skid surface (128) is a separately applied non-skid material.

10. The assembly of any one of the claims 1 to 9, wherein the one or more ergonomically designed feet (124) comprise a rubber material compound.

11. The assembly of any one of the claims 1 to 10, wherein the first material comprises nylon resin and the second material comprises a rubber material compound.

12. The assembly of any one of the claims 1 to 11, wherein a connection of the vertical side walls (102) extending from the bottom base is curved.

13. The assembly of any one of the claims 1 to 12, further comprising one or more side handles (1518) detachably connected to the vertical side walls (102),
wherein the one or more side handles preferably comprise a two-in-one handle having a rigid side handle (1504) and a non-rigid side handle (1506).

14. The assembly of claim 13, wherein the non-rigid side handle (1506) comprises a rope (1508) and rope handle (1512).

15. The assembly of any one of the claims 1 to 14, wherein the vertical side walls (102) meet in connection with the closed bottom base (202) at an outer periphery base bottom (126), wherein the outer periphery base bottom includes a curvature along its outer circumference.

## Patentansprüche

1. Baugruppe, umfassend:
einen Eimerkörper (100) mit vertikalen Seitenwänden (102);
wobei die vertikalen Seitenwände von einem geschlossenen unteren Boden (202) nach oben verlaufen;
einen Griff (106), der mit den vertikalen Seitenwänden (102) verbunden ist,
**gekennzeichnet durch**
einen oder mehrere ergonomisch gestaltete Füße (124), die ablösbar mit einer unteren Oberfläche (200) des unteren Bodens (202) verbunden sind und davon vorragen.

2. Baugruppe gemäß Anspruch 1,
wobei der Griff und der Eimerkörper (100) ein erstes Material umfassen;
und der eine oder die mehreren ergonomisch gestalteten Füße (124) ein zweites Material, das von dem ersten Material verschieden ist, umfassen.

3. Baugruppe gemäß Anspruch 1 oder 2, wobei der eine oder die mehreren ergonomisch gestalteten Füße (124) Rillen, Fingerführungen oder fingeraufnehmende Vertiefungen (118) aufweisen.

4. Baugruppe gemäß Anspruch 2 oder 3, wobei der eine oder die mehreren ergonomisch gestalteten Füße (124) mit der unteren Oberfläche (200) verbunden sind, so dass die Rillen oder Fingerführungen oder fingeraufnehmenden Vertiefungen (118) in Richtung zu der Mitte des Eimerkörpers (100) zeigen.

5. Baugruppe gemäß einem der Ansprüche 1 bis 4, wobei eine Rückseite des einen oder der mehreren ergonomisch gestalteten Füße (124) der gleichen Kontur wie ein Außenrand der unteren Oberfläche (200) des unteren Bodens (202) folgt.

6. Baugruppe gemäß einem der Ansprüche 1 bis 5, wobei eine Außenoberfläche des einen oder der mehreren ergonomisch gestalteten Füße (124) eine Designstruktur (130) aufweist.

7. Baugruppe gemäß Anspruch 6, wobei die Designstruktur (130) ausgewählt ist aus einer von einer erhabenen Designstruktur, Zapfen- oder Profilstruktur.

8. Baugruppe gemäß einem der Ansprüche 1 bis 7, wobei eine Außenoberfläche des einen oder der mehreren ergonomisch gestalteten Füße (124) eine rutschhemmende Oberfläche aufweist.

9. Baugruppe gemäß Anspruch 8, wobei die rutschhemmende Oberfläche (128) ein getrennt aufgebrachtes rutschhemmendes Material ist.

10. Baugruppe gemäß einem der Ansprüche 1 bis 9, wobei der eine oder die mehreren ergonomisch gestalteten Füße (124) eine Kautschukmaterialverbindung umfassen.

11. Baugruppe gemäß einem der Ansprüche 1 bis 10, wobei das erste Material Nylonharz umfasst und das zweite Material eine Kautschukmaterialverbindung umfasst.

12. Baugruppe gemäß einem der Ansprüche 1 bis 11, wobei eine Verbindung der vertikalen Seitenwänden (102), die von dem unteren Boden ausgeht, gekrümmt ist.

13. Baugruppe gemäß einem der Ansprüche 1 bis 12, ferner umfassend einen oder mehrere Seitengriffe (1518), die ablösbar mit den vertikalen Seitenwänden (102) verbunden sind,
wobei der eine oder die mehreren Seitengriffe vorzugsweise einen dualen Griff umfassen, der einen starren Seitengriff (1504) und einen nicht-starren Seitengriff (1506) aufweist.

14. Baugruppe gemäß Anspruch 13, wobei der nicht-starre Seitengriff (1506) ein Seil (1508) und einen Seilgriff (1512) umfasst.

15. Baugruppe gemäß einem der Ansprüche 1 bis 14, wobei sich die vertikalen Seitenwände (102) in Verbindung mit dem geschlossenen unteren Boden (202) an einem unteren Bodenaußenrand (126) treffen, wobei der untere Bodenaußenrand eine Krümmung entlang seines Außenumfangs aufweist.

## Revendications

1. Ensemble comprenant :
un corps de seau (100) ayant des parois latérales verticales (102) ;
dans lequel les parois latérales verticales s'étendent vers le haut à partir d'une base inférieure fermée (202) ;
une anse (106) reliée aux parois latérales verticales (102),
**caractérisé par**
un ou plusieurs pieds de conception ergonomique (124) reliés de manière détachable à une surface inférieure (200) de la base inférieure (202) et s'étendant au-delà de celle-ci.

2. Ensemble selon la revendication 1,
dans lequel l'anse et le corps de seau (100) comprennent un premier matériau ;
et le ou les pieds de conception ergonomique (124) comprennent un second matériau différent du premier matériau.

3. Ensemble selon la revendication 1 ou 2, dans lequel le ou les pieds de conception ergonomique (124) comprennent des rainures, des indentations pour les doigts ou des évidements pour recevoir les doigts (118).

4. Ensemble selon la revendication 2 ou 3, dans lequel le ou les pieds (124) de conception ergonomique sont reliés à la surface inférieure (200) de telle sorte que les rainures ou les indentations pour les doigts ou les évidements pour recevoir les doigts (118) soient orientés vers un centre du corps de seau (100).

5. Ensemble selon l'une quelconque des revendications 1 à 4, dans lequel une face arrière du ou des pieds de conception ergonomique (124) suit le même contour qu'un bord externe de la surface inférieure (200) de la base inférieure (202).

6. Ensemble selon l'une quelconque des revendications 1 à 5, dans lequel une surface externe du ou des pieds de conception ergonomique (124) comprend un motif de conception (130).

7. Ensemble selon la revendication 6, dans lequel le motif de conception (130) est sélectionné parmi un motif à dessin en relief, ou un motif de barrettes ou de sculptures.

8. Ensemble selon l'une quelconque des revendications 1 à 7, dans lequel une surface externe du ou des pieds de conception ergonomique (124) comprend une surface antidérapante.

9. Ensemble selon la revendication 8, dans lequel la surface antidérapante (128) est un matériau antidérapant appliqué séparément.

10. Ensemble selon l'une quelconque des revendications 1 à 9, dans lequel le ou les pieds de conception ergonomique (124) comprennent un composé de matériau en caoutchouc.

11. Ensemble selon l'une quelconque des revendications 1 à 10, dans lequel le premier matériau comprend une résine de nylon et le second matériau comprend un composé de matériau en caoutchouc.

12. Ensemble selon l'une quelconque des revendications 1 à 11, dans lequel un raccordement des parois latérales verticales (102) s'étendant depuis la base inférieure est incurvé.

13. Ensemble selon l'une quelconque des revendications 1 à 12, comprenant en outre une ou plusieurs anses latérales (1518) reliées de manière détachable aux parois latérales verticales (102),
dans lequel la ou les anses latérales comprennent de préférence une anse deux en un ayant une anse latérale rigide (1504) et une anse latérale non rigide (1506).

14. Ensemble selon la revendication 13, dans lequel l'anse latérale non rigide (1506) comprend une corde (1508) et une anse de corde (1512).

15. Ensemble selon l'une quelconque des revendications 1 à 14, dans lequel les parois latérales verticales (102) se rencontrent en liaison avec la base inférieure fermée (202) au niveau d'un fond de base de périphérie externe (126), dans lequel le fond de base de périphérie externe comprend une courbure le long de sa circonférence externe.
